# EUROPEAN PATENT APPLICATION

(11) **EP 4 794 215 A1**
(43) Date of publication of application: **19.08.2026**
(21) Application number: 24887800.1
(22) Date of filing: 28.10.2024
(51) Int. Cl.: H04B 7/0456

(54) **COMMUNICATION METHOD AND APPARATUS**

(30) Priority: 06.11.2023 CN 202311465405
(71) Applicant: HUAWEI TECHNOLOGIES CO., LTD., Shenzhen, Guangdong 518129 (CN)
(72) Inventor: LIAN, Jin, Shenzhen, Guangdong 518129 (CN); CAI, Shijie, Shenzhen, Guangdong 518129 (CN); LIU, Kunpeng, Shenzhen, Guangdong 518129 (CN)
(74) Representative: Pfenning, Meinig & Partner mbB
(86) International application number: PCT/CN2024/127850
(87) International publication number: WO 2025/098187

(57) **Abstract**

Embodiments of this application provide a communication method and apparatus, and relate to the communication field, to reflect a real antenna array including a plurality of non-uniformly distributed antenna elements. The method includes: A first device (a terminal device or a network device) obtains downlink channel state information; and determines, based on the downlink channel state information, a first precoding matrix from a first matrix corresponding to a first antenna array, where the first matrix includes a plurality of precoding matrices, a plurality of antenna elements in the first antenna array are located on a plurality of antenna panels, a distance between first adjacent antenna elements in the plurality of antenna elements is different from a distance between second adjacent antenna elements, the first adjacent antenna elements are adjacent antenna elements on adjacent antenna panels in the plurality of antenna panels, the second adjacent antenna elements are adjacent antenna elements on a same antenna panel in the plurality of antenna panels, and the first matrix is determined based on a width of the antenna panel in the plurality of antenna panels and the distance between the first adjacent antenna elements.

## Description

### COMMUNICATION METHOD AND APPARATUS

This application claims priority to Chinese Patent Application No. 202311465405.8, filed with the China National Intellectual Property Administration on November 6, 2023 and entitled "COMMUNICATION METHOD AND APPARATUS", which is incorporated herein by reference in its entirety.

### TECHNICAL FIELD

Embodiments of this application relate to the communication field, and in particular, to a communication method and apparatus.

### BACKGROUND

As one key technology of new radio access technologies (new radio access technology, NR), a massive multiple-input multiple-output (massive multiple-input multiple-output, Massive MIMO) technology has been widely researched, to improve a system capacity by using more spatial degree of freedom.

In a massive MIMO system, a transmit end (for example, a network device) may send data to a receive end (for example, a terminal device) by using an antenna array including a plurality of transmit antennas, thereby improving system throughput. To improve system transmission performance by performing precoding at the transmit end, the transmit end needs to learn of channel state information (channel state information, CSI), and the CSI is usually obtained by the receive end through channel measurement. Therefore, the receive end needs to feed back the CSI to the transmit end. Specifically, the transmit end and the receive end share a codebook, the codebook includes at least one set of precoding matrices, and the codebook is used to represent an antenna array used for communication between the transmit end and the receive end. The receive end feeds back the CSI to the transmit end mainly by feeding back a precoding matrix indicator (precoding matrix indicator, PMI) to the transmit end. After obtaining the CSI through channel estimation, the receive end selects a precoding matrix from the codebook based on the CSI, and feeds back a PMI corresponding to the precoding matrix to the network device. The network device recovers an optimal precoding matrix based on the PMI, and then performs precoding processing.

However, for an antenna array including a plurality of non-uniformly distributed antenna elements, a codebook determined in a current design manner cannot reflect a real antenna array. Therefore, how to reflect a real antenna array including a plurality of non-uniformly distributed antenna elements is an urgent problem to be resolved.

### SUMMARY

Embodiments of this application provide a communication method and apparatus, to reflect a real antenna array including a plurality of non-uniformly distributed antenna elements.

According to a first aspect, a communication method is provided. The method may be performed by a first device (a terminal device or a network device), or may be performed by a component of the first device, for example, a processor, a chip, or a chip system of a receiving device, or may be implemented by a logical module or software that can implement all or a part of functions of the receiving device. The method includes: obtaining downlink channel state information; and determining, based on the downlink channel state information, a first precoding matrix from a first matrix corresponding to a first antenna array, where the first matrix includes a plurality of precoding matrices, a plurality of antenna elements in the first antenna array are located on a plurality of antenna panels, a distance between first adjacent antenna elements in the plurality of antenna elements is different from a distance between second adjacent antenna elements, the first adjacent antenna elements are adjacent antenna elements on adjacent antenna panels in the plurality of antenna panels, the second adjacent antenna elements are adjacent antenna elements on a same antenna panel in the plurality of antenna panels, and the first matrix is determined based on a width of the antenna panel in the plurality of antenna panels and the distance between the first adjacent antenna elements.

Based on this solution, this embodiment of this application provides a communication method. For the non-uniformly distributed first antenna array (that is, the distance between the first adjacent antenna elements in the plurality of antenna elements in the first antenna array is different from the distance between the second adjacent antenna elements, the first adjacent antenna elements are the adjacent antenna elements on the adjacent antenna panels in the plurality of antenna panels, and the second adjacent antenna elements are the adjacent antenna elements on the same antenna panel in the plurality of antenna panels) that is formed by combining the antenna elements on the plurality of antenna panels, the terminal device or the network device can determine, based on the width of the antenna panel in the plurality of antenna panels and the distance between the first adjacent antenna elements, the first matrix corresponding to the first antenna array. In other words, the distance between the first adjacent antenna elements is considered in a process of determining the first matrix, so that the first matrix can reflect the first antenna array, and the network device can select a reliable configuration resource, to reduce interference to a signal in a transmission process, thereby improving communication efficiency between the terminal device and the network device.

In a possible design, the first adjacent antenna elements include a first antenna element and a second antenna element, the first antenna element and the second antenna element are located on different antenna panels, and the first antenna element and the second antenna element are adjacent.

In a possible design, the width of the antenna panel in the plurality of antenna panels is determined based on the distance between the second adjacent antenna elements and a quantity of rows or columns of an antenna element in the antenna panel.

In a possible design, when the adjacent antenna panels are adjacent in a horizontal direction, the width of the antenna panel in the plurality of antenna panels is a width of the antenna panel in the plurality of antenna panels in the horizontal direction, and the first adjacent antenna elements are adjacent antenna elements in the adjacent antenna panels in the horizontal direction.

In a possible design, the first matrix corresponding to the first antenna array is determined based on a preset matrix, a quantity of rows of the first antenna array, and phase offsets of other antenna panels in the plurality of antenna panels other than a first antenna panel relative to the first antenna panel, where the first antenna panel is a preset first reference antenna panel in the plurality of antenna panels; the preset matrix is an N-length discrete Fourier transform DFT matrix, the preset matrix is a matrix corresponding to N antennas in a same polarization direction, a distance between adjacent antennas in the N antennas in the same polarization direction is equal to a distance between second adjacent antennas, and N is an integer greater than 1; and a phase offset of a second antenna panel in the other antenna panels relative to the first antenna panel is determined based on the width of the antenna panel in the plurality of antenna panels and a distance between third adjacent antenna elements, the third adjacent antenna elements include a distance between two closest antenna elements that are respectively located in the first antenna panel and the second antenna panel, the second antenna panel is any one of the other antenna panels, and the distance between the third adjacent antenna elements is determined based on a distance between first adjacent antennas.

In a possible design, when the adjacent antenna panels are adjacent in a vertical direction, the width of the antenna panel in the plurality of antenna panels is a width of the antenna panel in the plurality of antenna panels in the vertical direction, and the first adjacent antennas are adjacent antennas in the adjacent antenna panels in the vertical direction.

In a possible design, the first matrix corresponding to the first antenna array is determined based on a preset matrix, a quantity of columns of the first antenna array, and phase offsets of other antenna panels in the plurality of antenna panels other than a third antenna panel relative to the third antenna panel, where the third antenna panel is a preset second reference antenna panel in the plurality of antenna panels; the preset matrix is an N-length discrete Fourier transform DFT matrix, the preset matrix is a matrix corresponding to N antennas in a same polarization direction, a distance between adjacent antennas in the N antennas in the same polarization direction is equal to a distance between second adjacent antennas, and N is an integer greater than 1; and a phase offset of a fourth antenna panel in the other antenna panels relative to the third antenna panel is determined based on the width of the antenna panel in the plurality of antenna panels and a distance between fourth adjacent antenna elements, the fourth adjacent antenna elements include two closest antennas that are respectively located in the third antenna panel and the fourth antenna panel, the fourth antenna panel is any one of the other antenna panels, and the distance between the fourth adjacent antenna elements is determined based on the distance between the first adjacent antenna elements.

In a possible design, the communication method further includes: receiving first indication information, where the first indication information indicates the width of the antenna panel and the distance between the first adjacent antennas; and determining, based on the first indication information, the first matrix corresponding to the first antenna array.

In a possible design, the communication method further includes: receiving second indication information, where the second indication information indicates the first matrix corresponding to the first antenna array.

In a possible design, the first indication information or the second indication information is carried in radio resource control RRC signaling or media access control control element MAC-CE signaling.

In a possible design, the communication method further includes: sending third indication information, where the third indication information indicates the first precoding matrix.

Based on this possible design, after the first device sends the third indication information, the network device may select the reliable configuration resource based on the first precoding matrix, to reduce interference to the signal in the transmission process, thereby improving communication efficiency between the terminal device and the first device.

In a possible design, each precoding matrix in the plurality of precoding matrices indicates one group of beams; and correspondingly, the first precoding matrix indicates a 1^{st} group of beams in the plurality of groups of beams indicated by the plurality of precoding matrices.

Based on this possible design, the first precoding matrix may directly indicate the 1^{st} group of beams in the plurality of groups of beams indicated by the plurality of precoding matrices. It may be understood that bit overheads occupied by indication information indicating a group of beams are less than bit overheads occupied by indication information indicating one or more phase adjustment coefficients. Therefore, compared with a solution in which the first device indicates the one or more phase adjustment coefficients, this solution can reduce signaling overheads.

According to a second aspect, a communication method is provided. The method may be performed by a first device (a terminal device or a network device), or may be performed by a component of the first device, for example, a processor, a chip, or a chip system of a receiving device, or may be implemented by a logical module or software that can implement all or a part of functions of the receiving device. The method includes: obtaining downlink channel state information; and determining, based on the downlink channel state information, a second precoding matrix from a second matrix corresponding to a second antenna array, where the second matrix includes a plurality of precoding matrices, the plurality of precoding matrices correspond to X types of beams, and X is a positive integer greater than 1.

In a possible design, the first device may be the terminal device, or the first device may be the network device.

Based on this solution, that the second matrix corresponding to the second antenna array corresponds to the X types of beams may be understood that different types of beams are related to types of drive channels that drive the antenna elements in the second antenna array. That is, a quantity of beam types is equal to a quantity of drive channel types. In other words, when the second antenna array corresponds to different types of drive channels, beams corresponding to the second antenna array include different types of beams. Therefore, compared with a solution in which types of different drive channels are considered as a same type and the determined second matrix corresponds to a type of beam, the second matrix can reflect the second antenna array, so that the network device can select a reliable configuration resource, to reduce interference to a signal in a transmission process, thereby improving communication efficiency between the terminal device and the network device.

In a possible design, a plurality of antenna elements in the second antenna array are driven by X types of drive channels, and the X types of drive channels separately drive different quantities of antenna elements.

In a possible design, an I^{th} type of beam in the X types of beams is determined based on a third matrix, a quantity of columns of the second antenna array, and a drive channel corresponding to the I^{th} type of beam, I is a positive integer, and I is less than or equal to X, where the third matrix is determined based on a preset matrix, the preset matrix is an N-length discrete Fourier transform DFT matrix, the preset matrix indicates a matrix corresponding to N antennas in a same polarization direction, a distance between adjacent antennas in the N antennas in the same polarization direction is equal to a distance between adjacent antennas on a same antenna panel in the second antenna array, and N is greater than or equal to the quantity of columns and/or a quantity of rows of the second antenna array.

In a possible design, when the plurality of antenna elements in the second antenna array are all located on a same antenna panel, the third matrix is the preset matrix; or when the plurality of antenna elements in the second antenna array are located on a plurality of antenna panels, and distances between adjacent antenna elements in the plurality of antenna elements are equal, the third matrix is the preset matrix.

In a possible design, when the plurality of antenna elements in the second antenna array are located on a plurality of antenna panels, a distance between first adjacent antenna elements in the plurality of antenna panels is different from a distance between second adjacent antenna elements, the first adjacent antenna elements are adjacent antenna elements on adjacent antenna panels in the plurality of antenna panels, and the second adjacent antenna elements are adjacent antenna elements on a same antenna panel in the plurality of antenna panels, the third matrix is determined based on the preset matrix and phase offsets of other antenna panels other than a first antenna panel in the plurality of antenna panels relative to the first antenna panel, where the first antenna panel is a preset first reference antenna panel in the plurality of antenna panels; and a phase offset of a second antenna panel in the other antenna panels relative to the first antenna panel is determined based on a width of the antenna panel in the plurality of antenna panels and a distance between third adjacent antenna elements, the third adjacent antenna elements include a distance between two closest antenna elements that are respectively located in the first antenna panel and the second antenna panel, the second antenna panel is any one of the other antenna panels, and the distance between the third adjacent antenna elements is determined based on a distance between first adjacent antennas.

In a possible design, when the plurality of antenna elements in the second antenna array are located on a plurality of antenna panels, a distance between first adjacent antenna elements in the plurality of antenna panels is different from a distance between second adjacent antenna elements, the first adjacent antenna elements are adjacent antenna elements on adjacent antenna panels in the plurality of antenna panels, and the second adjacent antenna elements are adjacent antenna elements on a same antenna panel in the plurality of antenna panels, the third matrix is determined based on the preset matrix and phase offsets of other antenna panels other than a third antenna panel in the plurality of antenna panels relative to the third antenna panel, where the third antenna panel is a preset second reference antenna panel in the plurality of antenna panels; the preset matrix is an N-length discrete Fourier transform DFT matrix, the preset matrix is a matrix corresponding to N antennas in a same polarization direction, a distance between adjacent antennas in the N antennas in the same polarization direction is equal to a distance between second adjacent antennas, and N is an integer greater than 1; and a phase offset of a fourth antenna panel in the other antenna panels relative to the third antenna panel is determined based on the width of the antenna panel in the plurality of antenna panels and a distance between fourth adjacent antenna elements, the fourth adjacent antenna elements include two closest antennas that are respectively located in the third antenna panel and the fourth antenna panel, the fourth antenna panel is any one of the other antenna panels, and the distance between the fourth adjacent antenna elements is determined based on the distance between the first adjacent antenna elements.

In a possible design, when I is equal to 1, that the I^{th} type of beam in the X types of beams is determined based on the third matrix, the quantity of columns of the second antenna array, and the drive channel corresponding to the I^{th} type of beam includes: A first type of beam is determined based on a fourth matrix and a first matrix set, where the first matrix set includes X matrices, and the fourth matrix is determined based on the third matrix and the quantity of columns of the second antenna array; and a Z^{th} matrix in the X matrices is determined based on the preset matrix and a first driving quantity, the first driving quantity is a quantity of drive channels required for driving a first quantity of antenna elements by using a Z^{th} type of drive channel in the X types of drive channels, the Z^{th} type of drive channel is one type of drive channel in the X types of drive channels, the first quantity is equal to the quantity of rows of the second antenna array, Z is a positive integer, and Z is less than or equal to X.

In a possible design, when I is equal to 1, that the I^{th} type of beam in the X types of beams is determined based on the third matrix, the quantity of columns of the second antenna array, and the drive channel corresponding to the I^{th} type of beam includes: A first type of beam is determined based on a sixth matrix and a third matrix set, where the third matrix set includes X matrices; a fifth matrix is determined based on a third matrix #1 and the quantity of rows of the second antenna array; and a Z^{th} matrix in the X matrices is determined based on a third matrix #2 and a first driving quantity, where the first driving quantity is a quantity of drive channels required for driving a first quantity of antenna elements by using a Z^{th} type of drive channel in the X types of drive channels, the Z^{th} type of drive channel is one type of drive channel in the X types of drive channels, the first quantity is equal to the quantity of rows of the second antenna array, Z is a positive integer, and Z is less than or equal to X.

In a possible design, a first beam in the first type of beam is determined based on a first vector and a first vector set, the first vector is a column row vector in the fourth matrix, the first vector set includes a column vector in each of the X matrices, and the first beam is one of the first type of beam.

In a possible design, a quantity of beams of the first type of beam is equal to a product of the quantity of columns of the second antenna array and a second driving quantity, and the second driving quantity is a quantity of drive channels required for driving the first quantity of antenna elements by using a drive channel that is in the X types of drive channels and that drives a largest quantity of antenna elements.

In a possible design, when I is greater than 1, that the I^{th} type of beam in the X types of beams is determined based on the third matrix, the quantity of columns of the second antenna array, and the drive channel corresponding to the I^{th} type of beam includes: The I^{th} type of beam is determined based on a fifth matrix and a second matrix set, and the second matrix set includes X-I+1 matrices, where the fifth matrix is determined based on the third matrix and a first difference, the first difference is a difference between the quantity of columns of the second antenna array and a first column quantity, the first column quantity is a quantity of columns occupied in the second antenna array by an antenna element driven by an I-1 type of drive channel, and the I-1 type of drive channel is a first I-1 type of drive channel that drives a largest quantity of antenna elements in the X types of drive channels; and a Y^{th} matrix in the X-I+1 matrices is determined based on the preset matrix and a third driving quantity, the third driving quantity is a quantity of drive channels required for driving the first quantity of antenna elements by using a Y^{th} type of drive channel in a X-I+1 type of drive channel, the X-I+1 type of drive channel is a drive channel in the X types of drive channels other than the I-1 type of drive channel, the Y^{th} type of drive channel is one type of drive channel in the X-I+1 type of drive channel, the first quantity is equal to the quantity of rows of the second antenna array, Y is a positive integer, and Y is less than or equal to X-I+1.

In a possible design, when I is greater than 1, that the I^{th} type of beam in the X types of beams is determined based on the third matrix, the quantity of columns of the second antenna array, and the drive channel corresponding to the I^{th} type of beam includes: The I^{th} type of beam is determined based on a seventh matrix and a fourth matrix set, where the fourth matrix set includes X-I+1 matrices; a fifth matrix is determined based on the third matrix #1 and a first difference, the first difference is a difference between the quantity of columns of the second antenna array and a first column quantity, the first column quantity is a quantity of columns occupied in the second antenna array by an antenna element driven by an I-1 type of drive channel, and the I-1 type of drive channel is a first I-1 type of drive channel that drives a largest quantity of antenna elements in the X types of drive channels; and a Y^{th} matrix in the X-I+1 matrices is determined based on the third matrix #2 and a third driving quantity, the third driving quantity is a quantity of drive channels required for driving the first quantity of antenna elements by using a Y^{th} type of drive channel in a X-I+1 type of drive channel, the X-I+1 type of drive channel is a drive channel in the X types of drive channels other than the I-1 type of drive channel, the Y^{th} type of drive channel is one type of drive channel in the X-I+1 type of drive channel, the first quantity is equal to the quantity of rows of the second antenna array, Y is a positive integer, and Y is less than or equal to X-I+1.

In a possible design, a second beam in the I^{th} type of beam is determined based on a second vector and a second vector set, the second vector is a column vector in the fifth matrix, the second vector set includes a column vector in each of the X-I+1 matrices, and the second beam is one of the I^{th} type of beam.

In a possible design, a beam quantity of the I^{th} type of beam is equal to a product of the first difference and a second difference, and the second difference is a difference between a fourth driving quantity and a fifth driving quantity, where the fourth driving quantity is a quantity of drive channels required for driving the first quantity of antenna elements by using a drive channel that drives a largest quantity of antennas in the X-I+1 type of drive channel, and the fifth driving quantity is a quantity of drive channels required for driving the first quantity of antenna elements by using a drive channel that drives a smallest quantity of antenna elements in the I-1 type of drive channel.

In a possible design, the communication method further includes: receiving fourth indication information, where the fourth indication information indicates a driving relationship between the X types of drive channels and the plurality of antenna elements in the second antenna array; and determining, based on the second indication information, the second matrix corresponding to the second antenna array.

In a possible design, the driving relationship between the plurality of antenna elements in the second antenna array includes: distribution, in the second antenna array, of antenna elements that are separately driven by the X types of drive channels and that are in the plurality of antenna elements.

In a possible design, the fourth indication information indicates a quantity of columns occupied by the antenna elements that are separately driven by the X types of drive channels in the second antenna array and a quantity of channels required for separately driving the first quantity of antenna elements by using the X types of drive channels, where the first quantity is equal to the quantity of rows of the second antenna array.

In a possible design, the fourth indication information further indicates the width of the antenna panel in the plurality of antenna panels and the distance between the first adjacent antenna elements, and the first adjacent antenna elements are the adjacent antenna elements on the adjacent antenna panels in the plurality of antenna panels.

In a possible design, the communication method further includes: receiving fifth indication information, where the fifth indication information indicates the second matrix corresponding to the second antenna array.

In a possible design, the fourth indication information or the fifth indication information is carried in RRC signaling or MAC-CE signaling.

In a possible design, the communication method further includes: sending sixth indication information, where the sixth indication information indicates the second precoding matrix.

Based on this possible design, after the first device sends the sixth indication information, the network device may select the reliable configuration resource based on the second precoding matrix, to reduce interference to the signal in the transmission process, thereby improving communication efficiency between the terminal device and the first device.

In a possible design, each precoding matrix in the plurality of precoding matrices indicates one group of beams; and correspondingly, the second precoding matrix indicates a 2^{nd} group of beams in the plurality of groups of beams indicated by the plurality of precoding matrices, and the 2^{nd} group of beams includes at least one type of beam in the X types of beams.

Based on this possible design, the second precoding matrix may directly indicate the 2^{nd} group of beams in the plurality of groups of beams indicated by the plurality of precoding matrices. It may be understood that bit overheads occupied by indication information indicating a group of beams are less than bit overheads occupied by indication information indicating one or more phase adjustment coefficients. Therefore, compared with a solution in which the first device indicates the one or more phase adjustment coefficients, this solution can reduce signaling overheads.

With reference to the first aspect and the second aspect, in a possible design, the first reference antenna panel is a leftmost or rightmost antenna panel in the plurality of antenna panels.

With reference to the first aspect and the second aspect, in a possible design, when the distance between the third adjacent antenna elements is equal to the distance between the first adjacent antenna elements, the phase offset of the second antenna panel relative to the first antenna panel is determined based on a phase relationship between the second antenna panel and the first antenna panel, and the phase relationship between the second antenna panel and the first antenna panel is determined based on the width of the antenna panel in the plurality of antenna panels in the horizontal direction and the distance between the first adjacent antenna elements.

With reference to the first aspect and the second aspect, in a possible design, the phase relationship between the second antenna panel and the first antenna panel satisfies the following relationship: ${{θ}_{n}^{1}}^{˜} = 2 π ∗ \frac{n}{N} ∗ \frac{\left({L}_{N}+{D}_{H}\right)}{{D}_{A}} , n = 0 , 1 , … , N - 1$ ${{θ}_{n}^{1}}^{˜}$ represents the phase relationship between the second antenna panel and the first antenna panel, *L_{N}* represents the width of the antenna panel in the plurality of antenna panels in the horizontal direction, *D_{H}* represents the distance between the first adjacent antenna elements, *N* represents a quantity of columns of an antenna array in each of the plurality of antenna panels, and *D_{A}* represents the distance between the second adjacent antenna elements.

With reference to the first aspect and the second aspect, in a possible design, the second reference antenna panel is an uppermost or lowermost antenna panel in the plurality of antenna panels.

With reference to the first aspect and the second aspect, in a possible design, when the distance between the fourth adjacent antenna elements is equal to the distance between the first adjacent antenna elements, the phase offset of the fourth antenna panel relative to the third antenna panel is determined based on a phase relationship between the fourth antenna panel and the third antenna panel, and the phase relationship between the fourth antenna panel and the third antenna panel is determined based on the width of the antenna panel in the plurality of antenna panels in the vertical direction and the distance between the first adjacent antenna elements.

With reference to the first aspect and the second aspect, in a possible design, the phase relationship between the fourth antenna panel and the third antenna panel satisfies the following relationship: ${{θ}_{n}^{2}}^{˜} = 2 π ∗ \frac{n}{N} ∗ \frac{\left({L}_{M}+{D}_{V}\right)}{{D}_{A}} , n = 0 , 1 , … , N - 1$ ${{θ}_{n}^{2}}^{˜}$ represents the phase relationship between the fourth antenna panel and the third antenna panel, *L_{M}* represents the width of the antenna panel in the plurality of antenna panels in the vertical direction, *D_{V}* represents a distance between the first adjacent antennas, *M* represents a quantity of columns of an antenna array in each of the plurality of antenna panels, and *D_{A}* represents the distance between the second adjacent antennas.

With reference to the first aspect and the second aspect, in a possible design, obtaining the downlink channel state information includes: receiving downlink channel reference information; and determining the downlink channel state information based on the downlink channel reference information.

With reference to the first aspect and the second aspect, in a possible design, obtaining the downlink channel state information includes: receiving uplink channel reference information; and determining the downlink channel state information based on the uplink channel reference information.

According to a third aspect, a communication apparatus is provided, to implement various methods. The communication apparatus may be the first device in the first aspect or the second aspect, or an apparatus included in the first device, for example, a chip or a chip system. The communication apparatus includes corresponding modules, units, or means (means) for implementing the methods. The modules, units, or means may be implemented by hardware, software, or hardware executing corresponding software. The hardware or the software includes one or more modules or units corresponding to functions.

In some possible designs, the communication apparatus may include a processing module and a transceiver module. The processing module may be configured to implement a processing function in any one of the foregoing aspects and the possible implementations of the foregoing aspects. The transceiver module may include a receiving module and a sending module that are respectively configured to implement a receiving function and a sending function in any one of the foregoing aspects and the possible implementations of the foregoing aspects.

In some possible designs, the transceiver module may include a transceiver circuit, a transceiver machine, a transceiver, or a communication interface.

According to a fourth aspect, a communication apparatus is provided, and includes a processor and a memory. The memory is configured to store computer instructions. When the processor executes the instructions, the communication apparatus is caused to perform the method according to any one of the aspects. The communication apparatus may be the first device in the first aspect or the second aspect, or an apparatus included in the first device, for example, a chip or a chip system.

According to a fifth aspect, a communication apparatus is provided, including a processor and a communication interface. The communication interface is configured to communicate with a module outside the communication apparatus. The processor is configured to execute a computer program or instructions, so that the communication apparatus performs the method according to any one of the aspects. The communication apparatus may be the first device in the first aspect or the second aspect, or an apparatus included in the first device, for example, a chip or a chip system.

According to a sixth aspect, a communication apparatus is provided, and includes at least one processor. The processor is configured to execute a computer program or instructions stored in a memory, so that the communication apparatus performs the method according to any one of the aspects. The memory may be coupled to the processor, or may be independent of the processor. The communication apparatus may be the first device in the first aspect or the second aspect, or an apparatus included in the first device, for example, a chip or a chip system.

In some possible designs, the communication apparatus includes the memory, and the memory is configured to store necessary program instructions and data.

In some possible designs, when the apparatus is a chip system, the apparatus may include a chip, or may include a chip and another discrete component.

It may be understood that when the communication apparatus provided in any one of the third aspect to the sixth aspect is a chip, a sending action/function of the communication apparatus may be understood as outputting information, and a receiving action/function of the communication apparatus may be understood as inputting information.

According to a seventh aspect, a computer-readable storage medium is provided. The computer-readable storage medium stores a computer program or instructions. When the computer program or the instructions are run on a communication apparatus, the communication apparatus is caused to perform the method according to any one of the aspects.

According to an eighth aspect, a computer program product including instructions is provided. When the computer program product runs on a communication apparatus, the communication apparatus is caused to perform the method according to any one of the aspects.

For technical effect brought by any design manner of the third aspect to the eighth aspect, refer to the technical effect brought by different design manners of the first aspect or the second aspect. Details are not described herein again.

### BRIEF DESCRIPTION OF DRAWINGS

FIG. 1 is a diagram of a structure of an antenna panel according to an embodiment of this application;
FIG. 2 is a diagram of a structure of a drive channel for driving antenna elements in an antenna array according to an embodiment of this application;
FIG. 3 is a diagram of a structure of another antenna panel according to an embodiment of this application;
FIG. 4 is a diagram of a structure of another antenna panel according to an embodiment of this application;
FIG. 5 is a diagram of beams corresponding to a the plurality of antenna panels codebook according to an embodiment of this application;
FIG. 6 is a diagram of a framework of a communication system to which embodiments of this application are applied;
FIG. 7 is a schematic flowchart of a communication method according to an embodiment of this application;
FIG. 8 is a schematic flowchart of another communication method according to an embodiment of this application;
FIG. 9 is a schematic flowchart of another communication method according to an embodiment of this application;
FIG. 10 is a diagram of a structure of another antenna panel according to an embodiment of this application;
FIG. 11 is a schematic flowchart of another communication method according to an embodiment of this application;
FIG. 12 is a schematic flowchart of determining a first matrix corresponding to a first antenna array according to an embodiment of this application;
FIG. 13 is a diagram of beams corresponding to another multi-antenna panel codebook according to an embodiment of this application;
FIG. 14 is a schematic flowchart of determining a second matrix corresponding to a second antenna array according to an embodiment of this application;
FIG. 15 is a schematic flowchart of another communication method according to an embodiment of this application;
FIG. 16 is a schematic flowchart of another communication method according to an embodiment of this application;
FIG. 17 is a diagram of beams corresponding to a second matrix according to an embodiment of this application;
FIG. 18 is a diagram of a structure of a communication apparatus according to an embodiment of this application;
FIG. 19 is a diagram of a structure of another communication apparatus according to an embodiment of this application; and
FIG. 20 is a diagram of a structure of another communication apparatus according to an embodiment of this application.

### DESCRIPTION OF EMBODIMENTS

In descriptions of this application, unless otherwise specified, the character "/" indicates that associated objects are in an "or" relationship. For example, A/B may indicate A or B. The term "and/or" in this application merely describes an association relationship between associated objects and indicates that three relationships may exist. For example, A and/or B may indicate three cases: Only A exists, both A and B exist, or only B exists, where A and B may be singular or plural.

In addition, in the descriptions of this application, "a plurality of" means two or more than two unless otherwise specified. "At least one item (piece) of the following" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural.

In addition, to clearly describe technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In addition, in embodiments of this application, the word like "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word like "example" or "for example" is intended to present a related concept in a specific manner for ease of understanding.

It may be understood that an "embodiment" used throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments in any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that, in this application, "when" and "if" mean that corresponding processing is performed in an objective situation, are not intended to limit time, do not require a determining action during implementation, and do not mean any other limitation.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, the apparatus provided in embodiments of this application may also correspondingly implement these features or functions. Details are not described herein.

In this application, unless otherwise specified, for same or similar parts in embodiments, refer to each other. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The following implementations of this application are not intended to limit the protection scope of this application.

For ease of understanding of the technical solutions in embodiments of this application, the following first briefly describes technologies related to this application.

### 1. Channel estimation:

Channel estimation is a process of estimating a characteristic of a channel by using a characteristic of a received signal. Because the signal is interfered to different degrees in a propagation process, when the signal arrives at a receive end, an amplitude, a phase, and a frequency of the signal change greatly. Through channel estimation, the signal can be recovered as much as possible, thereby improving decoding efficiency of the signal.

In an example, channel estimation is performed based on a channel state information reference signal (channel state information reference signal, CSI-RS).

Specifically, in this example, a channel estimation process includes: A network device sends a CSI-RS to a terminal device. After receiving the CSI-RS from the network device, the terminal device determines downlink channel state information based on the CSI-RS. Further, the terminal device determines, based on the downlink channel state information, a precoding matrix #1 corresponding to the downlink channel state information from a predefined codebook, and sends the precoding matrix #1 to the network device, so that the network device can select a reliable configuration resource based on the precoding matrix #1, to reduce interference to a signal in a transmission process, thereby improving communication efficiency between the terminal device and the network device. For example, the network device may select, based on the precoding matrix #1, a transmit beam facing the terminal device to communicate with the terminal device.

For example, an implementation form of the predefined codebook is a matrix. In addition, a column of vectors in the matrix is a precoding matrix. Therefore, it may also be considered that the predefined codebook includes a plurality of precoding matrices.

Optionally, the predefined codebook may be predefined in a protocol, or the predefined codebook may be predefined by the network device and sent to the terminal device via higher layer signaling. The higher layer signaling includes but is not limited to radio resource control (radio resource control, RRC) signaling and media access control control element (media access control control element, MAC-CE) signaling.

Optionally, the terminal device may send a precoding matrix indicator (precoding matrix indicator, PMI) to the network device, where the PMI indicates the precoding matrix #1.

In another example, channel estimation is performed based on a channel sounding reference signal (sounding reference signal, SRS).

Specifically, in this example, a channel estimation process includes: A terminal device sends a SRS to a network device. After receiving the SRS from the terminal device, the network device determines uplink channel information based on the SRS, and determines downlink channel state information based on channel reciprocity. Further, the network device determines a precoding matrix #2 corresponding to the downlink channel state information from a predefined codebook, so that the network device can select a reliable configuration resource based on the precoding matrix #2, to reduce interference to a signal in a transmission process, thereby improving communication efficiency between the terminal device and the network device. For example, the network device may select, based on the precoding matrix #2, a transmit beam facing the terminal device to communicate with the terminal device.

Optionally, the predefined codebook may be predefined in a protocol, or the predefined codebook may be predefined by the network device. The predefined codebook may also be referred to as an antenna domain-beam domain transformation matrix. A column of vectors in the predefined codebook is a precoding matrix. Therefore, it may also be considered that the predefined codebook includes a plurality of precoding matrices.

### 2. Evenly distributed antenna array:

The evenly distributed antenna array means that distances between adjacent antenna elements in a plurality of antenna elements are equal. One antenna element is one dual-polarized antenna, or two antennas in different polarization directions form one antenna element.

In an example, the plurality of antenna elements may be located in a same antenna panel, in other words, the plurality of antenna elements are evenly distributed in one antenna panel. In this case, it may be considered that the antenna array is an antenna array corresponding to a single antenna panel.

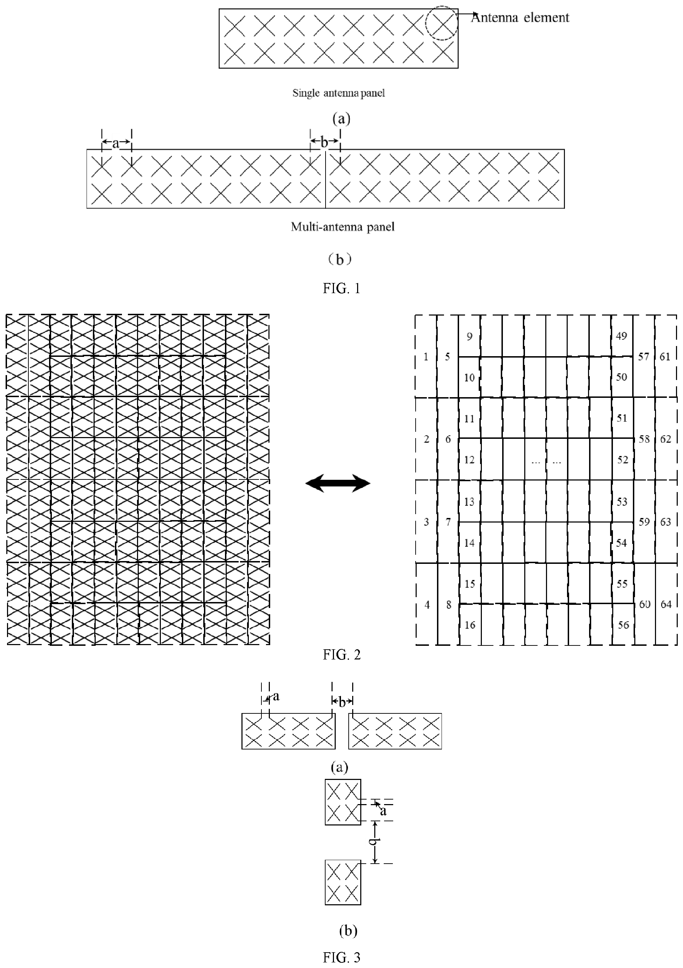

For example, the plurality of antenna elements in the single antenna panel are combined into one antenna array with N₂ rows and N₁ columns. For example, as shown in (a) in FIG. 1, a value of N₂ is 2, and a value of N₁ is 8. In this case, the plurality of antenna elements in the single antenna panel form an antenna array with two rows and eight columns.

It should be noted that, unless otherwise specified, in embodiments of this application, the antenna array corresponding to the single antenna panel is an antenna array with N₂ rows and N₁ columns and an equal distance between adjacent antenna elements.

For example, in this example, the evenly distributed antenna array forms one beam.

In another example, the plurality of antenna elements may be located in a plurality of antenna panels. In this case, a distance between first adjacent antennas is equal to a distance between second adjacent antennas.

The first antennas are adjacent antenna elements on adjacent antenna panels in the plurality of antenna panels. In other words, the first adjacent antenna elements are two closest antenna elements that are located in different antenna panels, where the different antenna panels are the adjacent antenna panels. The second adjacent antenna elements are adjacent antenna elements on a same antenna panel in the plurality of antenna panels. The second adjacent antenna elements are adjacent antenna elements on a same antenna panel in the plurality of antenna panels, or in other words, the second adjacent antenna elements are two adjacent antenna elements that have an equal distance in an antenna array formed by combining antenna elements in the plurality of antenna panels.

For example, a quantity of the plurality of antenna panels is 2, the distance between the first adjacent antenna elements is a, and the second adjacent antenna elements is b. A case in which a is equal to b is shown in (b) in FIG. 1. In this case, it may be considered that the plurality of antenna elements in the two antenna panels are evenly distributed.

For the plurality of antenna panels, an antenna array corresponding to each antenna panel independently forms one beam. In this case, when an antenna element on one antenna panel is adjusted, a beam formed by an antenna array on another panel does not change.

In a case of the plurality of antenna panels, a quantity of CSI-RS ports is twice a quantity of antenna elements on the plurality of antenna panels. A maximum quantity of antenna ports that can be supported by the network device is 32. A maximum value (rank) of a quantity of data streams that can be supported by the terminal device is 4.

It should be noted that all the antenna panels mentioned in embodiments of this application are the same. For example, sizes of all the antenna panels, quantities of antenna elements on all the antenna panels, and distribution of all the antenna elements are the same.

Optionally, the antenna elements in the evenly distributed antenna array may be driven by a same type of drive channel, or may be driven by different types of drive channels. When the antenna array is driven by different types of drive channels, the antenna array may also be referred to as a non-uniformly driven antenna array. In this embodiment of this application, the drive channel may also be referred to as a radio frequency channel. This is uniformly described herein, and details are not described below again.

Different types of drive channels drive different quantities of antenna elements. For example, the drive channel may drive three antenna elements, or the drive channel may drive six antenna elements, or the drive channel may drive 12 antenna elements.

For example, in FIG. 2, two types of drive channels drive an antenna array with 24 rows and 10 columns. The two types of drive channels are respectively a drive channel that can drive three antenna elements and a drive channel that can drive six antenna elements. For ease of description, a drive channel that drives three antenna elements is referred to as a drive channel #1 for short below, and a drive channel that drives six antenna elements is referred to as a drive channel #2 for short below.

As shown in FIG. 2, both the first two columns and the last two columns of antenna elements in the antenna array are driven by using a drive channel #2. That is, four drive channels #2 are required to drive each of the four columns of antenna elements. The remaining six columns of antenna elements are driven by using a drive channel #1. That is, eight drive channels #1 are required to drive each of the six columns of antenna elements.

### 3. Non-uniformly distributed antenna array:

The non-uniformly distributed antenna array refers to that distances between adjacent antenna elements in a plurality of antenna elements are not completely equal. For example, a plurality of antenna elements are located on the plurality of antenna panels, and it may be considered that a distance between first adjacent antenna elements is not equal to a distance between second adjacent antenna elements.

For example, the quantity of the plurality of antenna panels is 2, the distance between the first adjacent antenna elements is a, and the second adjacent antenna elements is b. A case in which a is not equal to b is shown in FIG. 3 (as shown in FIG. 3(a) and/or FIG. 3(b)), where a is less than b. In this case, it may be considered that the plurality of antenna elements in the two antenna panels are not evenly distributed.

For example, implementation of the plurality of antenna panels on which the non-uniformly distributed antenna arrays are located is the same as implementation of the plurality of antenna panels on which the evenly distributed antenna arrays are located. For details, refer to the related descriptions of the plurality of antenna panels on which the evenly distributed antenna arrays are located. Details are not described herein again.

### 4. the plurality of antenna panels codebook:

For example, the plurality of antenna panels codebook may be constructed in the following two manners:
In a possible implementation, the plurality of antenna panels codebook is determined based on the set of values of the phase adjustment coefficients. The phase adjustment coefficient is a phase change of each of the other antenna panels except the reference antenna panel in the plurality of antenna panels relative to the reference antenna panel.

For example, the reference antenna panel may be an antenna panel whose index is 0 in the plurality of antenna panels, or the reference antenna panel may be an antenna panel whose index is the smallest in the plurality of antenna panels.

An antenna array corresponding to each antenna panel in the plurality of antenna panels separately forms a beam. Therefore, the phase adjustment coefficient can indicate a phase change of another antenna panel relative to the reference antenna panel. That is, the plurality of antenna panels codebook represents antenna arrays respectively corresponding to different phase adjustment coefficients.

After determining the downlink channel state information, the terminal device may determine one or more phase adjustment coefficients based on the downlink channel state information. In other words, in this case, the precoding matrix #1 indicates the one or more phase adjustment coefficients. Therefore, the network device can determine, based on the one or more phase adjustment coefficients, the one or more beams corresponding to the precoding matrix #1.

For example, the phase adjustment coefficient and one or more beams corresponding to the precoding matrix #1 meet the following relationship (1):
(1)

In the relationship (1), is an index of an antenna panel in the plurality of antenna panels, and, where is a quantity of antenna panels in the plurality of antenna panels; is an index of a polarization direction of an antenna, and; is an index of a rank, and, where is a quantity of ranks; and is an index of a phase adjustment coefficient of an antenna panel whose index is compared with an antenna panel whose index is 0. is one or more beams corresponding to the precoding matrix #1. is a beam () formed by an antenna array on a single antenna panel, () is an offset relative to the beam () and is a beam () after the offset, and in a process of determining according to the relationship (1), is by default.

However, the phase adjustment coefficients of the two antenna panels in the plurality of antenna panels are related to a distance between the two antenna panels. However, in this possible implementation, the set of values of the phase adjustment coefficients is predefined. Therefore, regardless of how the plurality of antenna panels is distributed, the plurality of antenna panels codebook is determined based on the set of values of the phase adjustment coefficients. That is, regardless of how the plurality of antenna panelss are distributed, the plurality of antenna panels codebooks are the same. Therefore, the plurality of antenna panels codebook determined based on this possible implementation does not match the antenna array of the plurality of antenna panels. In other words, the plurality of antenna panels codebook in this case cannot truly reflect the antenna array of the plurality of antenna panels.

In another possible implementation, a the plurality of antenna panels codebook is constructed based on a single antenna panel codebook.

For example, using an antenna array column in a single antenna panel In an example, an implementation process of a single antenna panel codebook includes: determining a DFT matrix corresponding to one row of antennas in a same polarization direction in an antenna array in the single antenna panel; and determining, according to the DFT matrix, a DFT matrix corresponding to M rows of antennas in a same polarization direction in the antenna array in the single antenna panel; further, the DFT matrix corresponding to the antenna array whose antenna array column in the single antenna panel is is determined according to the DFT matrix, where the DFT matrix is the single antenna panel codebook.

Specifically, and meet the following relationship (2):
wherein, ${P}_{N} = \left[\begin{matrix}1 & … & 1 \\ ⋮ & {e}^{\frac{j 2 π \left({l}_{1}-1\right) \left({l}_{2}-1\right)}{N}} & ⋮ \\ 1 & … & {e}^{\frac{j 2 π \left(N-1\right) \left(N-1\right)}{N}}\end{matrix}\right] , N \times N , {l}_{1} , {l}_{2} = 0 , 1 , … , N$
where is represented as a Kronecker (kronecker) product of the matrix W and the matrix V. For example, is represented as a Kronecker product of a matrix and a matrix.
and meet the following relationship (3):
   (3)

Based on the foregoing implementation of the single antenna panel codebook, the antenna arrays in the plurality of antenna panels may be used as evenly distributed antenna arrays, and the plurality of antenna panels codebook is determined by using the single antenna panel codebook.

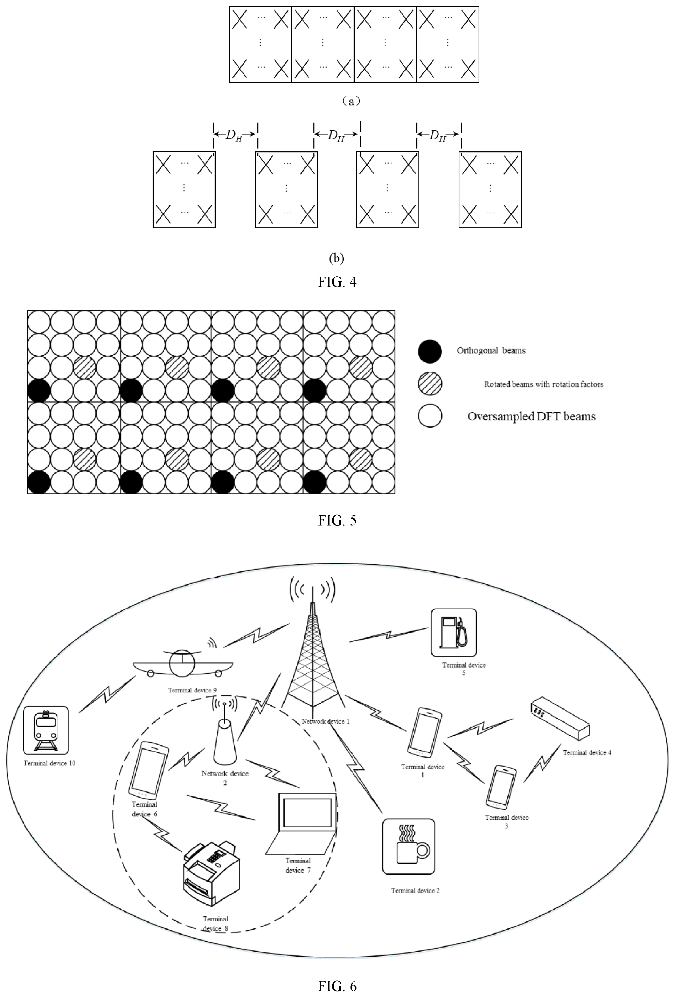

For example, a quantity of the plurality of antenna panelss is 4, and distribution of the plurality of antenna panelss is shown in FIG. 4 (that is, (a) and/or (b) in FIG. 4). In this case, an array antenna in the plurality of antenna panels is an antenna array. The antenna elements in the antenna array shown in (a) in FIG. 4 are evenly distributed, and the antenna elements in the antenna array shown in (b) in FIG. 4 are not evenly distributed. In this case, the distance between the first adjacent antennas is.

An implementation process of a the plurality of antenna panels codebook includes: determining a DFT matrix corresponding to one row of antennas in a same polarization direction in an array antenna in the plurality of antenna panels, where is a DFT matrix of; and determining, according to the DFT matrix, a DFT matrix corresponding to M rows of antennas in a same polarization direction in the array antenna in the plurality of antenna panels. Further, the DFT matrix corresponding to the antenna array in the column of the plurality of antenna panels is determined according to the DFT matrix. The DFT matrix is a the plurality of antenna panels codebook.

Specifically, and satisfy the following relationship (4):
wherein, ${P}_{4 N} = Kron \left({P}_{N}, {P}_{4}\right) , 4 N \times 4 N$
and meet the following relationship (5):
   (5)

In this example, both a the plurality of antenna panels codebook corresponding to the plurality of antenna panels shown in (a) in FIG. 4 and a the plurality of antenna panels codebook corresponding to the plurality of antenna panels shown in (b) in FIG. 4 are. That is, regardless of whether a distance between the first adjacent antennas is equal to a distance between the second adjacent antennas, codebooks corresponding to the two antenna panels are provided that the two antenna panels are distributed side by side in a horizontal direction.

However, the antenna elements in the antenna array that matches the are evenly distributed. Therefore, the antenna array does not match the antenna array shown in (b) in FIG. 4, that is, the antenna array shown in (b) in FIG. 4 cannot be truly reflected. Therefore, how to reflect a real antenna array including multiple non-uniformly distributed antenna elements is a problem to be urgently resolved.

A solution that can be easily thought of is to expand a non-uniformly distributed antenna array into a uniformly distributed antenna array, and perform puncturing after calculation, so as to determine a the plurality of antenna panels codebook.

For example, the quantity of antenna elements is increased based on the distance between the first adjacent antenna elements, so that the plurality of antenna panels becomes a evenly distributed antenna array. Therefore, codebooks corresponding to the evenly distributed antenna arrays are determined according to the process of the plurality of antenna panels codebook in the foregoing example, and a puncturing operation is performed to obtain the plurality of antenna panels codebook.

The four antenna panels shown in (b) in FIG. 4 are used In an example. It is assumed that two antenna elements are inserted between the first adjacent antenna elements, so that the antenna array shown in (b) in FIG. 4 becomes a evenly distributed antenna array. In this case, the evenly distributed antenna array is an antenna array. Similar to the foregoing example, first, is determined, where a vector used to represent the two inserted antenna elements in is represented by 0. Further, and are sequentially determined. Finally, puncturing is performed on to obtain a the plurality of antenna panels codebook corresponding to the antenna array shown in (b) in FIG. 4.

In this example, a beam corresponding to the plurality of antenna panels codebook is shown in FIG. 5. A circle in FIG. 5 represents one beam. It can be learned from FIG. 5 that the beam corresponding to the plurality of antenna panels codebook includes an orthogonal beam, an over-sampled DFT beam, and a rotation beam with a rotation factor. That is, there are only some orthogonal beams in the beams corresponding to the plurality of antenna panels codebook. Therefore, the plurality of antenna panels codebook in this case cannot be used for channel estimation.

Based on this, an embodiment of this application provides a communication method. For a non-uniformly distributed first antenna array (that is, a distance between first adjacent antenna elements in a plurality of antenna elements in the first antenna array is different from a distance between second adjacent antenna elements) that is formed by combining antenna elements in a plurality of antenna panels, the first adjacent antenna element is an adjacent antenna element on an adjacent antenna panel of the plurality of antenna panels, and the second adjacent antenna element is an adjacent antenna element on a same antenna panel of the plurality of antenna panels. The terminal device or the network device can determine, based on a width of the antenna panel in the plurality of antenna panels and a distance between the first adjacent antenna elements, the first matrix corresponding to the first antenna array. In other words, the distance between the first adjacent antenna elements is considered in a process of determining the first matrix, so that the first matrix can reflect the first antenna array, and the network device can select a reliable configuration resource, thereby reducing interference to a signal in a transmission process, and improving communication efficiency between the terminal device and the network device.

The technical solutions provided in this application may be applied to various communication systems. The communication system may be a 3rd generation partnership project (3rd generation partnership project, 3GPP) communication system, for example, a 4th generation (4th generation, 4G) long-term evolution (long term evolution, LTE) system, an evolved LTE (LTE-Advanced, LTE-A) system, a 5th generation (5th generation, 5G) new radio (new radio, NR) system, an internet of vehicles (vehicle to everything, V2X) system, an LTE-NR hybrid networking system, a device-to-device (device-to-device, D2D) system, a machine-to-machine (machine-to-machine, M2M) communication system, an internet of things (internet of things, IoT) system, or another next-generation communication system like a 6th generation (6th generation, 6G) communication system. Alternatively, the communication system may be a non-3GPP communication system. This is not limited.

The foregoing communication systems applicable to this application are merely examples for description, and communication systems applicable to this application are not limited thereto. This is uniformly described herein. Details are not described below again.

FIG. 6 shows an example of a communication system according to this application. The communication system includes at least one network device and at least one terminal device. Optionally, different terminal devices may communicate with each other.

Optionally, information transmission between the network device and the terminal device may be implemented by using a transmission medium like a radio wave, visible light, a laser, infrared light, or an optical fiber.

Optionally, the network device in embodiments of this application is a device that enables the terminal device to access a wireless network. The network device may be a node in a radio access network, may be referred to as a base station, or may be referred to as a radio access network (radio access network, RAN) node (or device).

For example, the network device may include an evolved base station (NodeB or eNB or e-NodeB, evolved NodeB) in an LTE system or an LTE-A system, for example, a conventional macro base station eNB and a micro base station eNB in a heterogeneous network scenario; or may include a next generation NodeB (next generation NodeB, gNB) of wideband code division multiple access (wideband code division multiple access, WCDMA); or may include a transmission reception point (transmission reception point, TRP), a home NodeB (for example, a home evolved NodeB, or a home NodeB, HNB), a baseband unit (baseband unit, BBU), a baseband unit pool (BBU pool), a base transceiver station (base transceiver station, BTS) in a global system for mobile communication (global system for mobile communication, GSM) or a code division multiple access (code division multiple access, CDMA) network, or a wireless fidelity (wireless fidelity, Wi-Fi) access point (access point, AP); or may include a base station in an NTN, to be specific, may be deployed on a high-altitude platform or a satellite. In the NTN, the network device may serve as a layer 1 (L1) relay (relay), or may serve as a base station, or may serve as a distributed unit (distributed unit, DU), or may serve as an integrated access and backhaul (integrated access and backhaul, IAB) node. Alternatively, the network device may be a device that implements a function of a base station in the IoT, for example, a device that implements a function of a base station in V2X, D2D, or machine-to-machine (machine-to-machine, M2M), or may include a vehicle-mounted device or a wearable device, or may include a network device in a 5G network or a public land mobile network (public land mobile network, PLMN) evolved after 5G. This is not limited in embodiments of this application.

In some possible scenarios, the network device in embodiments of this application may alternatively be a module or a unit that can implement a part of functions of the base station. For example, the network device may be a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, an access network device may be a network device in an open radio access network (open RAN, ORAN) system or a module of a network device. In the ORAN system, the CU may also be referred to as an open (open, O)-CU, the DU may also be referred to as an O-DU, the CU-CP may also be referred to as an O-CU-CP, the CU-UP may also be referred to as an O-CU-UP, and the RU may also be referred to as an O-RU. Any unit in the CU (or the CU-CP or the CU-UP), the DU, and the RU in this application may be implemented by using a software module, a hardware module, or a combination of a software module and a hardware module.

Optionally, the base station in embodiments of this application may include various forms of base stations, such as a macro base station, a micro base station (also referred to as a small cell), a relay station, an access point, a home base station, a TRP, a transmitting point (transmitting point, TP), and a mobile switching center. This is not specifically limited in embodiments of this application.

Optionally, the terminal device in embodiments of this application may be a user-side device configured to implement a wireless communication function, for example, a terminal or a chip that may be used in a terminal. The terminal may be user equipment (user equipment, UE), an access terminal, a terminal unit, a terminal station, a mobile station, a remote station, a remote terminal, a mobile device, a wireless communication device, a terminal agent, a terminal apparatus, or the like in the 5G network or the PLMN evolved after 5G. The access terminal may be a cellular phone (cellular phone), a cordless phone, a session initiation protocol (session initiation protocol, SIP) phone, a wireless local loop (wireless local loop, WLL) station, a smartphone (smartphone), a personal digital assistant (personal digital assistant, PDA), a handheld device having a wireless communication function, a computing device or another processing device connected to a wireless modem, a vehicle-mounted device or wearable device, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in smart grid (smart grid), a wireless terminal in transportation safety (transportation safety), a wireless terminal in smart city (smart city), a wireless terminal in smart home (smart home), a wireless data card, a tablet computer, a wireless modem (modem), a handheld device (handset), a laptop computer (laptop computer), a machine type communication (machine type communication, MTC) terminal, or the like. Alternatively, the terminal may be a terminal having a communication function in the IoT, for example, a terminal in V2X (for example, an internet of vehicles device), a terminal in D2D communication, or a terminal in M2M communication. The terminal may be mobile or fixed.

Optionally, roles of the network device and the terminal device may be relative to each other. For example, for a terminal device 9 and a terminal device 10 in FIG. 6, the terminal device 10 needs to access a network device 1 via the terminal device 9. Therefore, for the terminal device 10, the terminal device 9 may be configured as a network device in this case; and for the network device 1, the terminal device 9 is a terminal device in this case, that is, the network device 1 and the terminal device 9 communicate with each other by using a radio air interface protocol. Optionally, the network device 1 and the terminal device 9 may further communicate with each other by using an interface protocol between network devices. In this case, for the network device 1, the terminal device 9 is also used as a network device. Optionally, communication may be performed between a network device and a terminal device, between network devices, or between terminal devices using a licensed spectrum, or an unlicensed spectrum, or both a licensed spectrum and an unlicensed spectrum. Optionally, communication may be performed between a network device and a terminal device, between network devices, or between terminal devices using a spectrum below 6 gigahertz (gigahertz, GHz), or a spectrum above 6 GHz, or both a spectrum below 6 GHz and a spectrum above 6 GHz. A spectrum resource used for wireless communication is not limited in embodiments of this application.

The following describes, with reference to the accompanying drawings, the communication method provided in embodiments of this application. It may be understood that, in embodiments of this application, the network device or the terminal device may perform some or all of steps in embodiments of this application. These steps or operations are merely examples. In embodiments of this application, other operations or variations of various operations may be further performed. In addition, the steps may be performed in a sequence different from that presented in embodiments of this application, and not all of the operations in embodiments of this application may be necessarily performed.

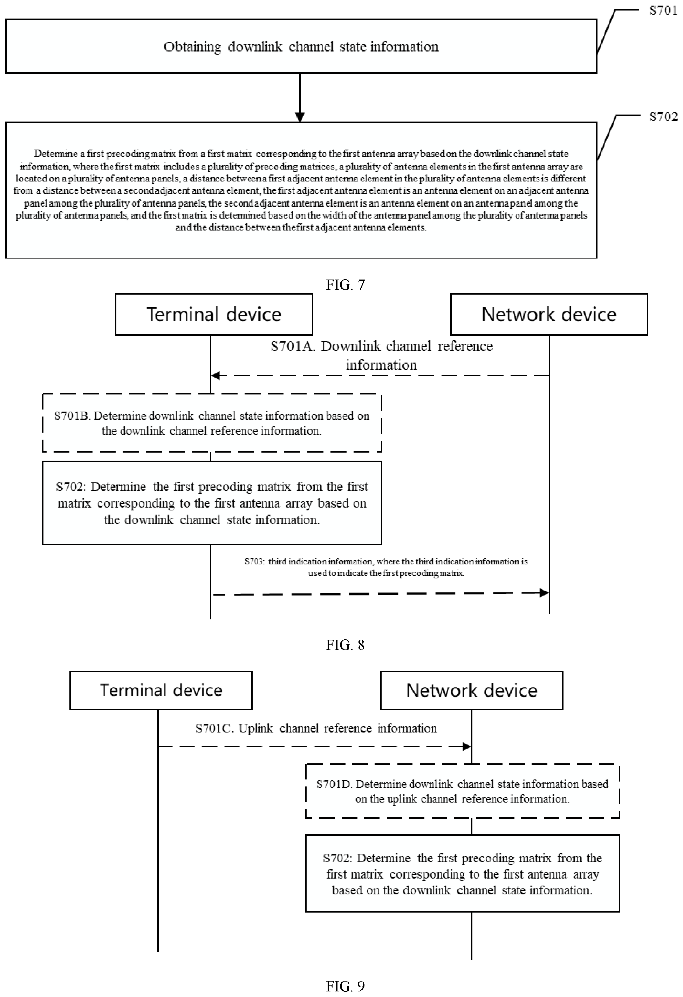

FIG. 7 shows a communication method according to an embodiment of this application. The communication method includes the following steps.

S701: A first device obtains downlink channel state information.

Optionally, based on a device type of the first device, the first device may obtain the downlink channel state information in different manners. The device type of the first device includes a terminal device or a network device.

In an example, when the first device is the terminal device, the terminal device may determine the downlink channel state information based on downlink channel reference information.

Optionally, in this example, the downlink channel reference information is sent by the network device to the terminal device. In other words, step S701 may be replaced with steps S701A and S701B shown in FIG. 8.

S701A: The network device sends the downlink channel reference information to the terminal device, and correspondingly, the terminal device receives the downlink channel reference information from the network device.

For example, the downlink channel reference information may include a CSI-RS.

S701B: The terminal device determines the downlink channel state information based on the downlink channel reference information.

In another example, when the first device is the network device, the network device may determine the downlink channel state information based on uplink channel reference information.

Optionally, in this example, the uplink channel reference information is sent by the terminal device to the network device. In other words, step S701 may be replaced with steps S701C and S701D shown in FIG. 9.

S701C: The terminal device sends the uplink channel reference information to the network device, and correspondingly, the network device receives downlink channel reference information from the terminal device.

For example, the uplink channel reference information may include an SRS.

S701D: The network device determines the downlink channel state information based on the uplink channel reference information.

Optionally, that the network device determines the downlink channel state information based on the uplink channel reference information includes: The network device determines uplink channel state information based on the uplink channel reference information; and further determines the downlink channel state information based on channel reciprocity.

S702: The first device determines, based on the downlink channel state information, a first precoding matrix from a first matrix corresponding to a first antenna array, where the first matrix includes a plurality of precoding matrices, a plurality of antenna elements in the first antenna array are located on a plurality of antenna panels, a distance between first adjacent antenna elements in the plurality of antenna elements is different from a distance between second adjacent antenna elements, the first adjacent antenna elements are adjacent antenna elements on adjacent antenna panels in the plurality of antenna panels, the second adjacent antenna elements are adjacent antenna elements on a same antenna panel in the plurality of antenna panels, and the first matrix is determined based on a width of the antenna panel in the plurality of antenna panels and the distance between the first adjacent antenna elements.

For example, both the distance between the first adjacent antenna elements and the distance between the second adjacent antenna elements may be represented by an electromagnetic wave wavelength (λ). For example, the distance d between the first adjacent antenna elements/the distance d between the second adjacent antenna elements and λ satisfies the following relationship (6): $d = k λ$

A value of *k* corresponding to the distance between the first adjacent antenna elements is different from a value of *k* corresponding to the distance between the second adjacent antenna elements. For example, the value of *k* includes but is not limited to 1/2 and 2/3.

It may be understood that one column of vectors of the first matrix is one precoding matrix, in other words, a quantity of the plurality of precoding matrices is equal to a quantity of columns of the first matrix. Therefore, it may be considered that the plurality of precoding matrices are combined into the first matrix.

For example, all of the plurality of antenna panels are the same. For example, sizes of all the antenna panels and distribution of antenna arrays in all the antenna panels are the same.

For example, because the first adjacent antenna elements are the adjacent antenna elements on the adjacent antenna panels in the plurality of antenna panels, the distance between the first adjacent antenna elements may also be understood as a distance between the adjacent antenna elements on the adjacent antenna panels.

Optionally, the first adjacent antenna elements include a first antenna element and a second antenna element, the first antenna element and the second antenna element are located on different antenna panels, and the first antenna element and the second antenna element are adjacent.

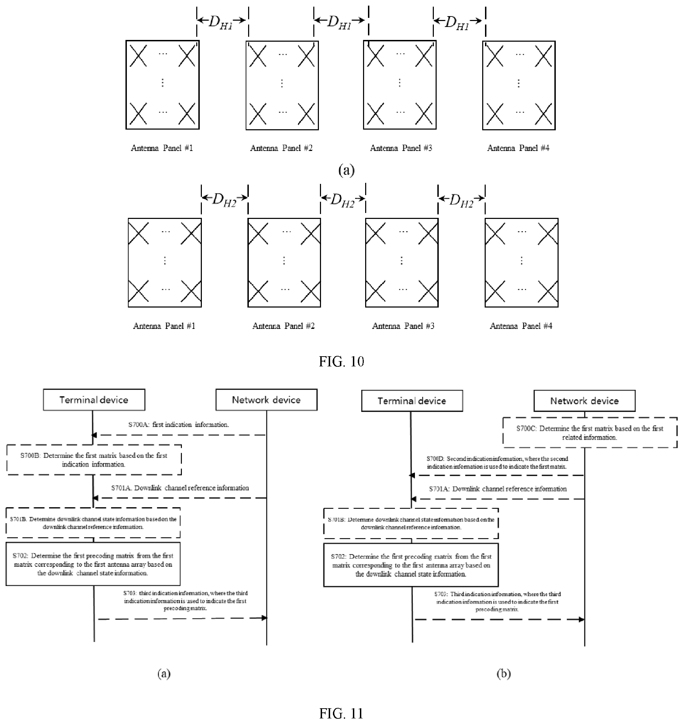

For example, the plurality of antenna panels include four antenna panels (for example, an antenna panel #1 to an antenna panel #4). As shown in FIG. 10 ((a) in FIG. 10 or (b) in FIG. 10), an example in which the adjacent antenna panels are an antenna panel #1 and an antenna panel #2 is used. The first antenna element may be one of a last column of antenna elements in an antenna array in the antenna panel #1, and correspondingly, the second antenna element is one of a first column of antenna elements in an antenna array in the antenna panel #2; or the first antenna element may be one of a first column of antenna elements in an antenna array in the antenna panel #2, and correspondingly, the second antenna element is one of a last column of antenna elements in an antenna array in the antenna panel #1. The first antenna element and the second antenna element are located at a same horizontal position.

In a case shown in (a) in FIG. 10, a distance between first adjacent antennas is *D*_{*H*1}, and the distance between the first adjacent antennas is greater than a distance between the antenna panel #1 and the antenna panel #2. In a case shown in (b) in FIG. 10, a distance between first adjacent antennas is *D*_{*H*2}, and the distance between the first adjacent antennas is equal to a distance between the antenna panel #1 and the antenna panel #2. In this case, the distance between the first adjacent antenna elements may also be understood as a distance between the adjacent antenna panels.

For example, that the first antenna element and the second antenna element are located at the same horizontal position may be understood as follows: The first antenna element and the second antenna element are distributed side by side in a horizontal direction. For example, as shown in (a) in FIG. 4, two antenna panels are located at a same horizontal position. In addition, two antenna panels shown in (b) in FIG. 4 are located in a same vertical position. That the two antenna panels are located at the same vertical position may be understood as follows: The two antenna panels are distributed side by side in a vertical direction.

Optionally, the width of the antenna panel may be understood as a width of any one of the plurality of antenna panels.

Optionally, the width of the antenna panel may be measured in advance, or the width of the antenna panel may be determined based on the distance between the second adjacent antenna elements and a quantity of rows or columns of an antenna element in the antenna panel.

For example, a width of an antenna panel is determined based on a distribution manner of an antenna array in the single antenna panel.

Distribution manner 1: A distance between an outermost antenna element in the antenna array in the single antenna panel and an edge of the antenna panel is greater than a first threshold. For example, distribution of the antenna array in the single antenna panel in the distribution manner 1 may be shown in (a) in FIG. 10.

For example, the first threshold is infinitely close to 0, or the first threshold is equal to 0.

Distribution manner 2: An outermost antenna element in the antenna array in the single antenna panel is located at an edge of the antenna panel. Alternatively, a distance between an outermost antenna element and an edge of the antenna panel may be ignored. Alternatively, a distance between an outermost antenna element and an edge of the antenna panel is less than or equal to a first threshold. For example, distribution of the antenna array in the single antenna panel in the distribution manner 2 may be shown in (b) in FIG. 10.

For example, in the distribution manner 2, the width of the antenna panel is a distance between a first antenna element and a last antenna element in one row or one column of antenna elements in the antenna array. Therefore, the width of the antenna panel may be determined based on the distance between the second adjacent antenna elements and the quantity of rows or columns of the antenna element in the antenna panel, or the width of the antenna panel may be obtained through measurement.

For example, the antenna array in the single antenna panel is an *M* × *N* antenna array. The width of the antenna panel and a distance between second adjacent antennas satisfies the following relationship (7) (that is, a relationship (7-1) or a relationship (7-2)), where both *M*, *N* are integers greater than 1: $Width of the antenna panel = Distance between two adjacent antenna \times \left(M-1\right)$ $Width of the antenna panel = Distance between two adjacent antenna \times \left(N-1\right)$

For example, based on the device type of the first device, the first device may obtain the first matrix based on the following two cases:
Case 1: The first device is the network device.

Optionally, in Case 1, the network device determines the first matrix based on first related information. The first related information includes the width of the antenna panel and the distance between the first adjacent antennas.

Optionally, the first related information further includes a quantity of rows of the antenna array in the single antenna panel, a quantity of columns of the antenna array in the single antenna panel, and a quantity of the plurality of antenna panels.

Case 2: The first device is the terminal device.

In an example, as shown in (a) in FIG. 11, the terminal device may obtain the first matrix by using steps S700A and S700B.

S700A: The network device sends first indication information to the terminal device, and correspondingly, the terminal device receives the first indication information from the network device. The first indication information indicates the width of the antenna panel and the distance between the first adjacent antennas.

Optionally, the first indication information further indicates a quantity of rows of the antenna array in the single antenna panel, a quantity of columns of the antenna array in the single antenna panel, and a quantity of the plurality of antenna panels. Alternatively, the quantity of rows of the antenna array in the single antenna panel, the quantity of columns of the antenna array in the single antenna panel, and the quantity of the plurality of antenna panels may be indicated by indication information other than the first indication information. Details are not described herein again.

For example, the first indication information may be carried in RRC signaling or MAC-CE signaling.

S700B: The terminal device determines the first matrix based on the first indication information.

In another example, as shown in (b) in FIG. 11, the terminal device may obtain the first matrix by using the following steps S700C and S700D:
S700C: The network device determines the first matrix based on first related information. The first related information includes the width of the antenna panel and the distance between the first adjacent antennas.

For example, implementation of step S700C is the same as implementation of the first matrix in Case 1. For details, refer to the related descriptions in Case 1. Details are not described herein again.

S700D: The network device sends second indication information to the terminal device, and correspondingly, the terminal device receives the second indication information from the network device. The second indication information indicates the first matrix.

For example, the second indication information may be carried in RRC signaling or MAC-CE signaling.

Optionally, when the terminal device determines the downlink channel state information, after step S702, the communication method may further include step S703.

S703: The terminal device sends third indication information to the network device, and correspondingly, the network device receives the third indication information from the terminal device. The third indication information indicates the first precoding matrix.

Based on the optional method, after the terminal device sends the third indication information to the network device, the network device may select a reliable configuration resource based on the first precoding matrix, to reduce interference to a signal in a transmission process, thereby improving communication efficiency between the terminal device and the network device.

Optionally, each precoding matrix in the plurality of precoding matrices indicates one group of beams; and correspondingly, the first precoding matrix indicates a 1^{st} group of beams in the plurality of groups of beams indicated by the plurality of precoding matrices.

For example, the first precoding matrix may indicate a group of beams by using a PMI. For example, the PMI may indicate *w_{p,r,l}*.

Based on this optional solution, the first precoding matrix may directly indicate the 1^{st} group of beams in the plurality of groups of beams indicated by the plurality of precoding matrices. It may be understood that bit overheads occupied by indication information indicating a group of beams are less than bit overheads occupied by indication information indicating one or more phase adjustment coefficients. Therefore, compared with a solution in which the terminal device indicates the one or more phase adjustment coefficients, this solution can reduce signaling overheads.

This embodiment of this application provides a communication method. For the non-uniformly distributed first antenna array (that is, the distance between the first adjacent antenna elements in the plurality of antenna elements in the first antenna array is different from the distance between the second adjacent antenna elements, the first adjacent antenna elements are the adjacent antenna elements on the adjacent antenna panels in the plurality of antenna panels, and the second adjacent antenna elements are the adjacent antenna elements on the same antenna panel in the plurality of antenna panels) that is formed by combining the antenna elements on the plurality of antenna panels, the terminal device or the network device can determine, based on the width of the antenna panel and the distance between the first adjacent antenna elements, the first matrix. In other words, the distance between the first adjacent antenna elements is considered in a process of determining the first matrix, so that the first matrix can reflect the first antenna array, and the network device can select the reliable configuration resource, to reduce interference to the signal in the transmission process, thereby improving communication efficiency between the terminal device and the network device.

The foregoing is the overall description of the communication method provided in embodiments of this application. The following describes in detail the "first matrix" mentioned in the foregoing embodiments. For example, the first matrix may be implemented based on the following three scenarios.

Scenario 1: The plurality of antenna panels are distributed at an equal interval in a horizontal direction. In other words, adjacent antenna panels in the plurality of antenna panels are adjacent in the horizontal direction.

Optionally, in Scenario 1, the width of the antenna panel is a width of the antenna panel in the horizontal direction. Correspondingly, the first adjacent antenna elements are adjacent antenna elements in the adjacent antenna panels in the horizontal direction.

For example, the width of the antenna panel may be obtained through measurement, or determined based on a second antenna, the distance between the second adjacent antenna elements, and a quantity of columns of the antenna element in the antenna panel. Specifically, for implementation of the width of the antenna panel, refer to the related descriptions in the foregoing distribution manner 1 and distribution manner 2. Details are not described herein again.

Optionally, in Scenario 1, the first matrix is determined based on a preset matrix, a quantity of rows of the first antenna array, and phase offsets of other antenna panels in the plurality of antenna panels other than a first antenna panel relative to the first antenna panel.

The first antenna panel is a preset first reference antenna panel in the plurality of antenna panels.

The preset matrix is an N-length DFT matrix, the preset matrix is a matrix corresponding to N antennas in a same polarization direction, and a distance between adjacent antennas in the N antennas in the same polarization direction is equal to the distance between the second adjacent antennas.

A phase offset of a second antenna panel in the other antenna panels relative to the first antenna panel is determined based on the width of the antenna panel and a distance between third adjacent antennas, the third adjacent antenna elements include two closest antenna elements that are respectively located in the first antenna panel and the second antenna panel, the second antenna panel is any one of the other antenna panels, and the distance between the third adjacent antenna elements is determined based on the distance between the first adjacent antennas.

For example, the first reference antenna panel is a leftmost or rightmost antenna panel in the plurality of antenna panels. For example, distribution of the plurality of antenna panels is shown in FIG. 10. The first reference antenna panel may be an antenna panel #1, or the first reference antenna panel may be an antenna panel #4. For ease of description, the following uses an example in which the first reference antenna panel is the leftmost antenna panel in the plurality of antenna panels (for example, the antenna panel #1 in FIG. 10) for description.

For example, distribution of the plurality of antenna panels is shown in FIG. 10, and the first antenna panel is the antenna panel #1. The other antenna panels are the antenna panel #2 to the antenna panel #4, and the second antenna panel is any one of the antenna panel #2 to the antenna panel #4.

For example, that the preset matrix is the N-length DFT matrix may be understood as follows: The preset matrix is a *N* × *N* DFT matrix. In addition, because the preset matrix is a matrix corresponding to the N evenly distributed antennas in the same polarization direction, the preset matrix may be ${P}_{N} = \left[\begin{matrix}1 & … & 1 \\ ⋮ & {e}^{\frac{j 2 π \left({l}_{1}-1\right) \left({l}_{2}-1\right)}{N}} & ⋮ \\ 1 & … & {e}^{\frac{j 2 π \left(N-1\right) \left(N-1\right)}{N}}\end{matrix}\right]$, *N* × *N*, *l*₁, *l*₂ = 1, ... ,*N*.

For example, the distance between the third adjacent antenna elements may be understood as a distance between one of antenna elements that are in the second antenna panel and that are closest to the first antenna panel and one of antenna elements that are in the first antenna panel and that are closest to the second antenna panel, where two antenna elements in the third adjacent antenna elements are located at a same horizontal position.

Optionally, the first matrix is determined based on a matrix corresponding to a first group of antennas, the quantity of rows of the first antenna array, and the phase offsets of the other antenna panels in the plurality of antenna panels relative to the first antenna panel. The first group of antennas are antennas in a same polarization direction in one row of antenna elements in an antenna array in the first antenna panel, and the matrix corresponding to the first group of antennas is determined based on the preset matrix and a quantity of columns of the antenna array in the first antenna panel.

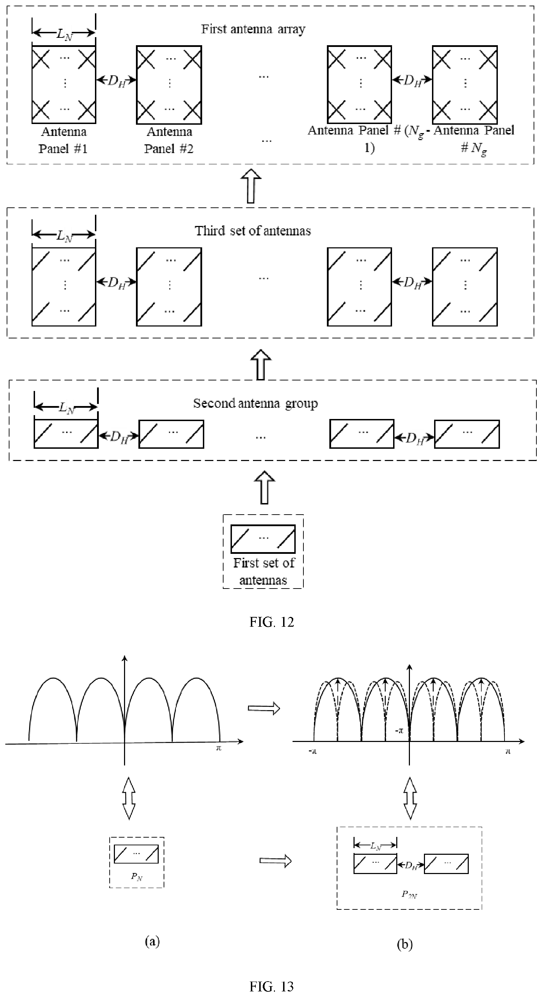

For example, the preset matrix is *P_{N}*, and the quantity of columns of the antenna array in the first antenna panel is *N*. The matrix corresponding to the first group of antennas is *P_{N}*. For example, the first matrix and the first group of antennas may be shown in FIG. 12. For ease of description, the following provides descriptions by using antennas in a same polarization direction in a first row of antenna elements in the first antenna panel as the first group of antennas.

Optionally, the first matrix is determined based on a matrix corresponding to a second group of antennas and the quantity of rows of the first antenna array. The second group of antennas are antennas in a same polarization direction in a row of antenna elements in the first antenna array, the second group of antennas include the first group of antennas, and the matrix corresponding to the second group of antennas is determined based on the matrix corresponding to the first group of antennas and the phase offsets of the other antenna panels in the plurality of antenna panels other than the first antenna panel relative to the first antenna panel.

For example, when the first group of antennas are the antennas in the same polarization direction in the first row of antenna elements in the first antenna panel, the second group of antennas are antennas in the same polarization direction in a first row of antenna elements in the first antenna array. For example, the second group of antennas may be shown in FIG. 12.

For example, the matrix corresponding to the second group of antennas and the matrix corresponding to the first group of antennas satisfy the following relationship (8): ${P}_{2 N} = \left\{{P}_{N}^{0}, ⋯ ,{P}_{N}^{i}, ⋯ ,{P}_{N}^{n},\right\} , 2 N \times 2 N , n = 0 , 1 , … , i , … , N - 1$ wherein, ${P}_{2 N}^{n} = Kron \left({P}_{N}^{n}, {Q}_{{N}_{g}}^{n}\right)$, 2*N* × 2

In the relationship (8), *P*_{2*N*} is the matrix corresponding to the second group of antennas, ${P}_{N}^{n}$ represents an *n*^{th} column of vectors in the matrix *P_{N}* corresponding to the first group of antennas, *N* represents the quantity of columns of the antenna array in the first antenna panel, ${Q}_{{N}_{g}}^{n}$ represents the phase offsets of the other antenna panels relative to the first antenna panel, and *N_{g}* is the quantity of the plurality of antenna panels.

Optionally, when the distance between the third adjacent antenna elements is equal to the distance between the first adjacent antenna elements, the phase offset of the second antenna panel relative to the first antenna panel is determined based on a phase relationship between the second antenna panel and the first antenna panel, and the phase relationship between the second antenna panel and the first antenna panel is determined based on the width of the antenna panel in the horizontal direction and the distance between the first adjacent antennas.

For example, distribution of the plurality of antenna panels is shown in FIG. 10, and the first antenna panel is the antenna panel #1. The distance between the third adjacent antenna elements is equal to the distance between the first adjacent antenna elements, that is, it indicates that the second antenna panel is the antenna panel #2. In other words, a phase relationship between the antenna panel #1 and the antenna panel #2 is determined based on the width of the antenna panel in the horizontal direction and the distance between the first adjacent antennas.

Optionally, the phase relationship between the second antenna panel and the first antenna panel satisfies the following relationship (9): ${{θ}_{n}^{1}}^{˜} = 2 π ∗ \frac{n}{N} ∗ \frac{\left({L}_{N}+{D}_{H}\right)}{{D}_{A}} , n = 0 , 1 , … , N - 1$

Herein, ${{θ}_{n}^{1}}^{˜}$ represents the phase relationship between the second antenna panel and the first antenna panel, *L_{N}* represents the width of the antenna panel in the horizontal direction, *D_{H}* represents the distance between the first adjacent antenna elements, *N* represents a quantity of columns of the antenna array in each of the plurality of antenna panels, and *D_{A}* represents the distance between the second adjacent antenna elements.

For example, the distance between the second adjacent antenna elements is λ/2. *D_{A}* in the relationship (9) may be replaced with λ/2. In other words, in this case, the relationship (9) is transformed into the following relationship (10): ${{θ}_{n}^{1}}^{˜} = 2 π ∗ \frac{n}{N} ∗ \frac{\left({L}_{N}+{D}_{H}\right)}{λ / 2} , n = 0 , 1 , … , N - 1$

Implementation of each parameter in the relationship (10) is the same as implementation of each parameter in the relationship (9). For details, refer to the related descriptions in the relationship (9). Details are not described herein again.

Optionally, when the distance between the third adjacent antenna elements is greater than the distance between the first adjacent antenna elements, the phase relationship between the second antenna panel and the first antenna panel is an integer multiple of a first phase relationship. The first phase relationship is the phase relationship between the second antenna panel and the first antenna panel when the distance between the third adjacent antenna elements is equal to the distance between the first adjacent antenna elements.

For example, when the distance between the third adjacent antenna elements is greater than the distance between the first adjacent antenna elements, the phase relationship between the second antenna panel and the first antenna panel and the first phase relationship satisfy the following relationship (11): ${{Aθ}_{n}^{1}}^{˜} = 2 π ∗ \frac{n}{N} ∗ \frac{A \left({L}_{N}+{D}_{H}\right)}{{D}_{A}} , n = 0 , 1 , … , N - 1$

In the relationship (11), *A* is an *A*^{th} antenna panel in the other antenna panels, ${{Aθ}_{n}^{1}}^{˜}$ is a phase relationship between the A^{th} antenna panel and the first antenna panel, *L_{N}* represents the width of the antenna panel in the horizontal direction, *D_{H}* represents the distance between the first adjacent antenna elements, *N* represents the quantity of columns of the antenna array in each of the plurality of antenna panels, and *D_{A}* represents the distance between the second adjacent antenna elements.

Therefore, the phase offsets of the other antenna panels relative to the first antenna panel and a phase relationship between each of the other antenna panels and the first antenna panel satisfy the following relationship (12): ${Q}_{{N}_{g}}^{n} = {P}_{A + 1} ⊙ \left[\begin{matrix}1 & ⋯ & 1 & ⋯ & 1 \\ {e}^{j {{θ}_{n}^{1}}^{˜}} & ⋯ & {e}^{j {{θ}_{n}^{1}}^{˜}} & ⋯ & {e}^{j {{θ}_{n}^{1}}^{˜}} \\ ⋮ & ⋮ & ⋮ & ⋮ & ⋮ \\ {e}^{j {{mθ}_{n}^{1}}^{˜}} & ⋯ & {e}^{j {{mθ}_{n}^{1}}^{˜}} & ⋯ & {e}^{j {{mθ}_{n}^{1}}^{˜}} \\ ⋮ & ⋯ & ⋮ & ⋮ & ⋮ \\ {e}^{j {{Aθ}_{n}^{1}}^{˜}} & ⋯ & {e}^{j {{Aθ}_{n}^{1}}^{˜}} & ⋯ & {e}^{j {{Aθ}_{n}^{1}}^{˜}}\end{matrix}\right] , \left(A+1\right) \times \left(A+1\right) , m = 0 , 1 , 2 , … , A$

In the relationship (12), ${Q}_{{N}_{g}}^{n}$ represents the phase offsets of the other antenna panels relative to the first antenna panel, *N_{g}* is the quantity of the plurality of antenna panels, *A* is the *A*^{th} antenna panel in the other antenna panels, and ${{Aθ}^{˜}}_{n}^{1}$ is the phase relationship between the A^{th} antenna panel and the first antenna panel.

*W⊙V* represents multiplication of elements at a same position in a matrix W and a matrix V. For example, ${P}_{A + 1} ⊙ \left[\begin{matrix}1 & ⋯ & 1 & ⋯ & 1 \\ {e}^{j {{θ}_{n}^{1}}^{˜}} & ⋯ & {e}^{j {{θ}_{n}^{1}}^{˜}} & ⋯ & {e}^{j {{θ}_{n}^{1}}^{˜}} \\ ⋮ & ⋮ & ⋮ & ⋮ & ⋮ \\ {e}^{j {{mθ}_{n}^{1}}^{˜}} & ⋯ & {e}^{j {{mθ}_{n}^{1}}^{˜}} & ⋯ & {e}^{j {{mθ}_{n}^{1}}^{˜}} \\ ⋮ & ⋮ & ⋮ & ⋮ & ⋮ \\ {e}^{j {{Aθ}_{n}^{1}}^{˜}} & ⋯ & {e}^{j {{Aθ}_{n}^{1}}^{˜}} & ⋯ & {e}^{j {{Aθ}_{n}^{1}}^{˜}}\end{matrix}\right]$ represents multiplication of elements at a same position in a matrix *P*_{*A*+1} and a matrix $\left[\begin{matrix}1 & ⋯ & 1 & ⋯ & 1 \\ {e}^{j {{θ}_{n}^{1}}^{˜}} & ⋯ & {e}^{j {{θ}_{n}^{1}}^{˜}} & ⋯ & {e}^{j {{θ}_{n}^{1}}^{˜}} \\ ⋮ & ⋮ & ⋮ & ⋮ & ⋮ \\ {e}^{j {{mθ}_{n}^{1}}^{˜}} & ⋯ & {e}^{j {{mθ}_{n}^{1}}^{˜}} & ⋯ & {e}^{j {{mθ}_{n}^{1}}^{˜}} \\ ⋮ & ⋮ & ⋮ & ⋮ & ⋮ \\ {e}^{j {{Aθ}_{n}^{1}}^{˜}} & ⋯ & {e}^{j {{Aθ}_{n}^{1}}^{˜}} & ⋯ & {e}^{j {{Aθ}_{n}^{1}}^{˜}}\end{matrix}\right]$.

For example, a value of *N_{g}* is 2. A spatial direction of a beam corresponding to *P_{N}* is shown in (a) in FIG. 13 (namely, a solid-line beam in (a) in FIG. 13), and a spatial direction of a beam corresponding to *P*_{2*N*} is shown in (b) in FIG. 13 (namely, a dashed-line beam in (b) in FIG. 13), that is, a process of determining *P*_{2*N*} based on *P_{N}* . To be specific, a wide beam (namely, the beam corresponding to *P_{N}*) is adjusted to a narrow beam with a more precise spatial direction (namely, the beam corresponding to *P*_{2*N*}).

Optionally, the first matrix is determined based on a matrix corresponding to a third group of antennas. The third group of antennas are all antennas in a same polarization direction in the first antenna array, or in other words, it may be considered that the third group of antennas are all antennas that correspond to a polarization direction Z and that are in the first antenna array, where a value of Z is 0 or 1. The third group of antennas include the second group of antennas, and the matrix corresponding to the third group of antennas is determined based on the matrix corresponding to the second group of antennas and the quantity of rows of the first antenna array. For example, the third group of antennas may be shown in FIG. 12.

For example, the first matrix and the matrix corresponding to the third group of antennas satisfy the following relationship (13): ${P}_{4 MN} = \left[\begin{matrix}{P}_{2 MN} & 0 \\ 0 & {P}_{2 MN}\end{matrix}\right] , 4 MN \times 4 MN$ wherein, *P*_{2*MN*} = *Kron*(*P*_{2*N*}, *P_{M}*), 2*MN* × 2*MN*

In the relationship (13), *P*_{4*MN*} is the first matrix, *P*_{2*MN*} is the matrix corresponding to the third group of antennas, *P*_{2*N*} is the matrix corresponding to the second group of antennas, and *M* is the quantity of rows of the first antenna array.

Scenario 2: The plurality of antenna panels are distributed at an equal interval in a vertical direction. In other words, adjacent antenna panels in the plurality of antenna panels are adjacent in the vertical direction.

Optionally, in Scenario 2, the width of the antenna panel is a width of the antenna panel in the vertical direction. Correspondingly, the first adjacent antenna elements are adjacent antenna elements in the adjacent antenna panels in the vertical direction.

For example, the width of the antenna panel may be obtained through measurement, or determined based on a second antenna, the distance between the second adjacent antenna elements, and a quantity of columns of the antenna element in the antenna panel. Specifically, for implementation of the width of the antenna panel, refer to the related descriptions in the foregoing distribution manner 1 and distribution manner 2. Details are not described herein again.

Optionally, in Scenario 2, the first matrix corresponding to the first antenna array is determined based on a preset matrix, a quantity of columns of the first antenna array, and phase offsets of other antenna panels in the plurality of antenna panels other than a third antenna panel relative to the third antenna panel.

The third antenna panel is a preset second reference antenna panel in the plurality of antenna panels. A phase offset of a fourth antenna panel in the other antenna panels relative to the third antenna panel is determined based on the width of the antenna panel in the plurality of antenna panels and a distance between fourth adjacent antenna elements. The fourth adjacent antenna elements include two closest antennas that are respectively located in the third antenna panel and the fourth antenna panel. The fourth antenna panel is any one of the other antenna panels, and the distance between the fourth adjacent antenna elements is determined based on the distance between the first adjacent antenna elements.

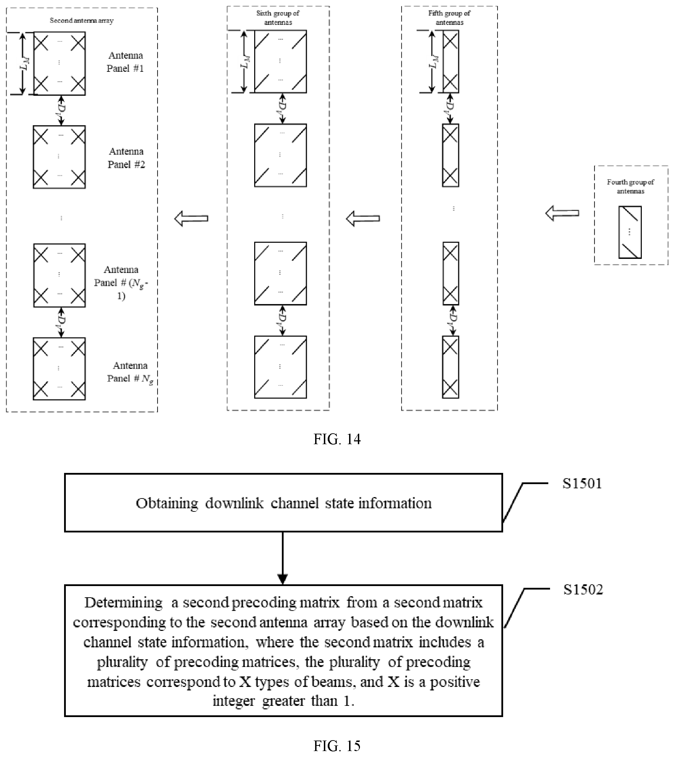

For example, the second reference antenna panel is an uppermost or lowermost antenna panel in the plurality of antenna panels. For example, distribution of the plurality of antenna panels is shown in a second antenna array in FIG. 14. The second reference antenna panel may be an antenna panel #1, or the second reference antenna panel may be an antenna panel #4. For ease of description, the following uses an example in which the second reference antenna panel is the uppermost antenna panel in the plurality of antenna panels (for example, the antenna panel #1 in FIG. 14) for description.

For example, distribution of the plurality of antenna panels is shown in FIG. 14, and the third antenna panel is the antenna panel #1. The other antenna panels are an antenna panel #2 to the antenna panel #4, and the fourth antenna panel is any one of the antenna panel #2 to the antenna panel #4.

For example, the distance between the fourth adjacent antenna elements may be understood as a distance between one of antenna elements that are in the fourth antenna panel and that are closest to the third antenna panel and one of antenna elements that are in the third antenna panel and that are closest to the fourth antenna panel, where two antenna elements in the fourth adjacent antenna elements are located in a same vertical position.

Optionally, the first matrix is determined based on a matrix corresponding to a fourth group of antennas, the quantity of columns of the first antenna array, and phase offsets of other antenna panels in the plurality of antenna panels other than a first antenna panel relative to the first antenna panel. The fourth group of antennas are antennas in a same polarization direction in a column of antenna elements in an antenna array in the third antenna panel, and the matrix corresponding to the fourth group of antennas is determined based on the preset matrix and a quantity of rows of the antenna array in the third antenna panel.

For example, the preset matrix is *P_{N}*, and the quantity of rows of the antenna array in the third antenna panel is *M*. The matrix corresponding to the third group of antennas is *P_{M}*. For example, the first matrix and the fourth group of antennas may be shown in FIG. 14. For ease of description, the following provides descriptions by using antennas in a same polarization direction in a first column of antenna elements in the third antenna panel as the fourth group of antennas.

Optionally, the first matrix is determined based on a matrix corresponding to a fifth group of antennas and the quantity of columns of the first antenna array. The fifth group of antennas are antennas in a same polarization direction in a column of antenna elements in the first antenna array, the fifth group of antennas include the fourth group of antennas, and the matrix corresponding to the fifth group of antennas is determined based on the matrix corresponding to the fourth group of antennas and the phase offsets of the other antenna panels in the plurality of antenna panels other than the third antenna panel relative to the third antenna panel.

For example, when the fourth group of antennas are the antennas in the same polarization direction in the first column of antenna elements in the third antenna panel, the fifth group of antennas are antennas in a same polarization direction in a first column of antenna elements in the first antenna array. For example, the fifth group of antennas may be shown in FIG. 14.

For example, the matrix corresponding to the second group of antennas and the matrix corresponding to the first group of antennas satisfy the following relationship (14): ${P}_{2 M} = \left\{{P}_{M}^{0}, ⋯ ,{P}_{M}^{i}, ⋯ ,{P}_{M}^{n}\right\} , 2 M \times 2 M , n = 0 , 1 , … , i , … , M - 1$ wherein, ${P}_{2 M}^{n} = Kron \left({P}_{M}^{n}, {Q}_{{N}_{g}}^{n}\right)$, 2*M* × 2

In the relationship (14), *P*_{2*M*} is the matrix corresponding to the fifth group of antennas, ${P}_{M}^{n}$ is a *n*^{th} column vector in the matrix *P_{M}* corresponding to the fourth group of antennas, *M* represents a quantity of columns of the antenna array in the third antenna panel, ${Q}_{{N}_{g}}^{n}$ represents the phase offsets of the other antenna panels relative to the third antenna panel, and *N_{g}* is the quantity of the plurality of antenna panels.

Optionally, when the distance between the fourth adjacent antenna elements is equal to the distance between the first adjacent antenna elements, the phase offset of the fourth antenna panel relative to the third antenna panel is determined based on a phase relationship between the fourth antenna panel and the third antenna panel, and the phase relationship between the fourth antenna panel and the third antenna panel is determined based on the width of the antenna panels in the plurality of antenna panels in the vertical direction and the distance between the first adjacent antenna elements.

Optionally, the phase relationship between the fourth antenna panel and the third antenna panel satisfies the following relationship (15): ${{θ}_{n}^{2}}^{˜} = 2 π ∗ \frac{n}{N} ∗ \frac{\left({L}_{M}+{D}_{V}\right)}{{D}_{A}} , n = 0 , 1 , … , M - 1$

Herein, ${{θ}_{n}^{2}}^{˜}$ represents the phase relationship between the fourth antenna panel and the third antenna panel, *L_{M}* represents the width of the antenna panel in the vertical direction, *D_{V}* represents the distance between the first adjacent antennas, *M* represents the quantity of columns of the antenna array in each antenna panel, and *D_{A}* represents the distance between the second adjacent antennas.

For example, the distance between the second adjacent antenna elements is λ/2. *D_{A}* in the relationship (15) may be replaced with λ/2. In other words, in this case, the relationship (15) is transformed into the following relationship (16): ${{θ}_{n}^{2}}^{˜} = 2 π ∗ \frac{n}{N} ∗ \frac{\left({L}_{M}+{D}_{V}\right)}{λ / 2} , n = 0 , 1 , … , M - 1$

Implementation of each parameter in the relationship (16) is the same as implementation of each parameter in the relationship (15). For details, refer to the related descriptions in the relationship (14). Details are not described herein again.

Optionally, when the distance between the fourth adjacent antenna elements is greater than the distance between the first adjacent antenna elements, the phase relationship between the fourth antenna panel and the third antenna panel is an integer multiple of a second phase relationship. The second phase relationship is the phase relationship between the fourth antenna panel and the third antenna panel when the distance between the fourth adjacent antenna elements is equal to the distance between the first adjacent antenna elements.

For example, when the distance between the fourth adjacent antenna elements is greater than the distance between the first adjacent antenna elements, the phase relationship between the fourth antenna panel and the third antenna panel and the second phase relationship satisfy the following relationship (17): ${{Bθ}_{n}^{2}}^{˜} = 2 π ∗ \frac{n}{N} ∗ \frac{B \left({L}_{M}+{D}_{V}\right)}{{D}_{A}} , n = 0 , 1 , … , M - 1$

In the relationship (10), *B* is a *B*^{th} antenna panel in the other antenna panels, ${{Bθ}_{n}^{2}}^{˜}$ is a phase relationship between the B^{th} antenna panel and the fourth antenna panel, *L_{M}* represents the width of the antenna panel in the vertical direction, *D_{V}* represents the distance between the first adjacent antenna elements, *M* represents a quantity of rows of the antenna array in each of the plurality of antenna panels, and *D_{A}* represents the distance between the second adjacent antenna elements.

Therefore, the phase offsets of the other antenna panels relative to the third antenna panel and a phase relationship between each of the other antenna panels and the third antenna panel satisfy the following relationship (18): $\begin{matrix}{Q}_{{N}_{g}}^{n} = {P}_{B + 1} ⊙ \left[\begin{matrix}1 & ⋯ & 1 & ⋯ & 1 \\ {e}^{j {{θ}_{n}^{2}}^{˜}} & … & {e}^{j {{θ}_{n}^{2}}^{˜}} & … & {e}^{j {{θ}_{n}^{2}}^{˜}} \\ ⋮ & ⋮ & ⋮ & ⋮ & ⋮ \\ e {{}^{j m {θ}_{n}^{2}}}^{˜} & ⋯ & e {{}^{j m {θ}_{n}^{2}}}^{˜} & ⋯ & e {{}^{j m {θ}_{n}^{2}}}^{˜} \\ ⋮ & ⋮ & ⋮ & ⋮ & ⋮ \\ {e}^{{j B {θ}_{n}^{2}}^{˜}} & ⋯ & {e}^{{j B {θ}_{n}^{2}}^{˜}} & ⋯ & {e}^{{j B {θ}_{n}^{2}}^{˜}}\end{matrix}\right] , & \left(B + 1\right) \times \left(B + 1\right) , & m = 0,1,2, … , B\end{matrix}$

In the relationship (18), ${Q}_{{N}_{g}}^{n}$ represents the phase offsets of the other antenna panels relative to the third antenna panel, *N_{g}* is the quantity of the plurality of antenna panels, *B* is the *B*^{th} antenna panel in the other antenna panels, and ${{Bθ}_{n}^{2}}^{˜}$ is the phase relationship between the B^{th} antenna panel and the third antenna panel.

Optionally, the first matrix is determined based on a matrix corresponding to a sixth group of antennas. The sixth group of antennas are antennas in a same polarization direction in the first antenna array, the sixth group of antennas include the fifth group of antennas, and the matrix corresponding to the sixth group of antennas is determined based on the matrix corresponding to the fifth group of antennas and the quantity of columns of the first antenna array. For example, the sixth group of antennas may be shown in FIG. 14.

For example, the first matrix and the matrix corresponding to the sixth group of antennas satisfy the following relationship (19): ${P}_{4 MN} = \left[\begin{matrix}{P}_{2 MN} & 0 \\ 0 & {P}_{2 MN}\end{matrix}\right] , 4 MN \times 4 MN$ wherein, *P*₂*_{MN} = Kron*(*P*_{2*M*}, *P_{N}*), 2*MN* × 2*MN*

In the relationship (19), *P*_{4*MN*} is the first matrix, *P*_{2*MN*} is the matrix corresponding to the sixth group of antennas, *P*_{2*M*} is the matrix corresponding to the fifth group of antennas, and *N* is the quantity of columns of the first antenna array.

Scenario 3: In the plurality of antenna panels, antenna panels at a same horizontal position are distributed at an equal interval, and antenna panels at a same vertical position are distributed at an equal interval.

Optionally, in Scenario 3, the width of the antenna panel includes a width of the antenna panel in a horizontal direction and a width of the antenna panel in a vertical direction. Correspondingly, for the horizontal direction, the first adjacent antenna elements are adjacent antenna elements in the adjacent antenna panels in the horizontal direction; and for the vertical direction, the first adjacent antenna elements are adjacent antenna elements in the adjacent antenna panels in the vertical direction.

For example, for implementation of the width of the antenna panel and the first adjacent antenna elements, refer to the related descriptions in Scenario 1 and Scenario 2. Details are not described herein again.

Optionally, in Scenario 3, the first matrix is determined based on a matrix corresponding to a second group of antennas and a matrix corresponding to a fifth group of antennas.

For example, for implementation of the matrix corresponding to the second group of antennas and the matrix corresponding to the fifth group of antennas, refer to the related descriptions in Scenario 1 and Scenario 2. Details are not described herein again.

For example, the first matrix, the matrix corresponding to the second group of antennas, and the matrix corresponding to the fifth group of antennas satisfy the following relationship (20): ${P}_{8 MN} = \left[\begin{matrix}{P}_{4 MN} & 0 \\ 0 & {P}_{4 MN}\end{matrix}\right] , 8 MN \times 8 MN$ wherein, *P*_{4*MN*} = *Kron*(*P*_{2*N*}, *P*_{2*M*}), 4*MN* × 4*MN*

In the relationship (20), *P*_{8*MN*} is the first matrix, *P*_{4*MN*} is a matrix corresponding to antennas in a same polarization direction in the first antenna array, *P*_{2*M*} is the matrix corresponding to the fifth group of antennas, *M* is a quantity of rows of the antenna array in each antenna panel, *P*_{2*N*} is the matrix corresponding to the second group of antennas, and N is a quantity of columns of the antenna array in each antenna panel.

The foregoing uses an example in which all the antenna elements in the antenna array are driven by a same type of drive channel, to be specific, the first antenna array is an antenna array in which all the antenna elements are driven by a same type of drive channel, to describe a process in which the first device determines the first precoding matrix based on the first matrix corresponding to the first antenna array. Actually, the antenna elements in the antenna array may alternatively be driven by different types of drive channels. To be specific, the first device may determine a second precoding matrix based on a second matrix corresponding to a second antenna array, where antenna elements in the second antenna array are driven by different types of drive channels. The following describes in detail a process in which the first device may determine the second precoding matrix based on the second matrix corresponding to the second antenna array.

For example, antenna elements in the second antenna array are driven by X types of drive channels. As shown in FIG. 15, the communication method includes steps S1501 and S1502.

S1501: Step S1501 is the same as step S701. For details, refer to the related descriptions of step S701. Details are not described herein again.

S1502: The first device determines, based on the downlink channel state information, the second precoding matrix from the second matrix corresponding to the second antenna array. The second matrix includes a plurality of precoding matrices, the plurality of precoding matrices correspond to X types of beams, and X is a positive integer greater than 1.

For example, different types of beams may be understood as different coverage areas of the beams.

For example, that the plurality of precoding matrices correspond to the X types of beams may be understood as that the plurality of precoding matrices indicate the X types of beams, where each precoding matrix in the plurality of precoding matrices indicates one or more beams.

Optionally, a value of X is determined based on types of drive channels for driving the plurality of antenna elements in the second antenna array. For example, the value of X is a quantity of the types of the drive channels for driving the plurality of antenna elements in the second antenna array.

It should be noted that, in embodiments of this application, unless otherwise specified, drive channels that drive one column of antenna elements in the second antenna array are of a same type.

For example, as shown in FIG. 2, the X types of drive channels may include two types of drive channels. The two types of drive channels are respectively a drive channel that can drive three antenna elements and a drive channel that can drive six antenna elements. In this case, the value of X is 2.

For example, based on the device type of the first device, the first device may obtain the second matrix based on the following two cases:
Case 1: The first device is the network device.

Optionally, in Case 1, the network device determines the second matrix based on second related information. The second related information includes a driving relationship between the X types of drive channels and the plurality of antenna elements in the second antenna array.

Optionally, the driving relationship between the plurality of antenna elements in the second antenna array includes: distribution, in the plurality of antenna elements in the second antenna array, of the antenna elements that are separately driven by the X types of drive channels.

For example, distribution, in the second antenna array, of the antenna elements that are separately driven by the X types of drive channels may include: a quantity of columns occupied by the antenna elements that are separately driven by the X types of drive channels in the second antenna array and a quantity of channels required for separately driving a first quantity of antennas by using the X types of drive channels, where the first quantity is equal to a quantity of rows of the second antenna array.

For example, the second antenna array is an antenna array shown in FIG. 2. To be specific, the plurality of antenna elements in the second antenna array are driven by two types of drive channels. One type of drive channel drives three antenna elements, and the antenna elements driven by this type of drive channel occupy six columns, which are respectively second to seventh columns of a second antenna element. In addition, a quantity of channels required for driving antenna elements in any one of the six columns by using this type of drive channel is 8. The other type of drive channel drives six antenna elements. The antenna elements driven by this type of drive channel occupy four columns, which are respectively columns 0, 1, 8, and 9 of the second antenna element. In addition, a quantity of channels required for driving antenna elements in any one of the four columns by using this type of drive channel is 4. Case 2: The first device is the terminal device.

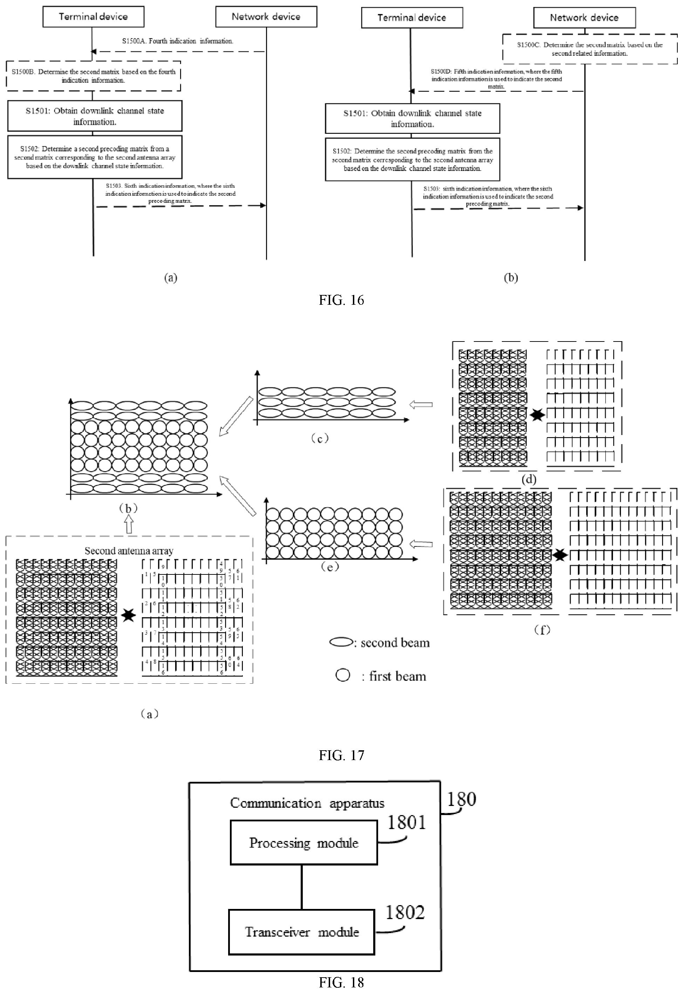

In an example, as shown in (a) in FIG. 16, the terminal device may obtain the second matrix by using steps S1500A and S1500B.

S1500A: The network device sends fourth indication information to the terminal device, and correspondingly, the terminal device receives the fourth indication information from the network device. The fourth indication information indicates a driving relationship between the X types of drive channels and the plurality of antenna elements in the second antenna array.

For example, the driving relationship between the X types of drive channels and the plurality of antenna elements in the second antenna array includes: a quantity of columns occupied by the antenna elements that are separately driven by the X types of drive channels in the second antenna array and a quantity of channels required for separately driving a first quantity of antennas by using the X types of drive channels. Therefore, it may be considered that the fourth indication information indicates the quantity of columns occupied by the antennas that are separately driven by the X types of drive channels in the second antenna array and the quantity of channels required for separately driving the first quantity of antennas by using the X types of drive channels.

S1500B: The terminal device determines the second matrix based on the fourth indication information.

For example, the fourth indication information may be carried in RRC signaling or MAC-CE signaling.

In another example, as shown in (b) in FIG. 16, the terminal device may obtain the second matrix by using the following steps S1500C and S1500D:
S1500C: The network device determines the second matrix based on second related information. The second related information includes a driving relationship between the X types of drive channels and the plurality of antenna elements in the second antenna array.

For example, implementation of step S1500C is the same as implementation of the second matrix in Case 1. For details, refer to the related descriptions in Case 1. Details are not described herein again.

S1500D: The network device sends fifth indication information to the terminal device, and correspondingly, the terminal device receives the fifth indication information from the network device. The fifth indication information indicates the second matrix.

For example, the fifth indication information may be carried in RRC signaling or MAC-CE signaling.

Optionally, when the terminal device determines the downlink channel state information, after step S1502, as shown in (a) in FIG. 16 or (b) in FIG. 16, the communication method may further include step S1503.

S1503: The terminal device sends sixth indication information to the network device, and correspondingly, the network device receives the sixth indication information from the terminal device. The sixth indication information indicates the second precoding matrix.

For example, implementation of the sixth indication information is similar to implementation of the third indication information. For details, refer to the related descriptions of the third indication information. Details are not described herein again.

Based on this optional solution, after the terminal device sends the sixth indication information, the network device may select a reliable configuration resource based on the second precoding matrix, to reduce interference to the signal in the transmission process, thereby improving communication efficiency between the terminal device and the first device.

Optionally, each precoding matrix in the plurality of precoding matrices indicates one group of beams; and correspondingly, the second precoding matrix indicates a 2^{nd} group of beams in the plurality of groups of beams indicated by the plurality of precoding matrices, and the 2^{nd} group of beams includes at least one type of beam in the X types of beams.

For example, implementation of the second precoding matrix is similar to implementation of the first precoding matrix. For details, refer to the related descriptions of the first precoding matrix. Details are not described herein again.

Based on this optional solution, the second precoding matrix may directly indicate the 2^{nd} group of beams in the plurality of groups of beams indicated by the plurality of precoding matrices. It may be understood that bit overheads occupied by indication information indicating a group of beams are less than bit overheads occupied by indication information indicating one or more phase adjustment coefficients. Therefore, compared with a solution in which the first device indicates the one or more phase adjustment coefficients, this solution can reduce signaling overheads.

According to the communication method provided in embodiments of this application, the second matrix corresponding to the second antenna array corresponds to the X types of beams. It may be understood that different types of beams are related to types of drive channels that drive antenna elements in the second antenna array. That is, a quantity of beam types is equal to a quantity of drive channel types. In other words, when the second antenna array corresponds to different types of drive channels, beams corresponding to the second antenna array include different types of beams. Therefore, compared with a solution in which types of different drive channels are considered as a same type and the determined second matrix corresponds to a type of beam, the second matrix can reflect the second antenna array, so that the network device can select a reliable configuration resource, to reduce interference to the signal in the transmission process, thereby improving communication efficiency between the terminal device and the network device.

The foregoing is the overall description of the communication method provided in embodiments of this application. The following describes in detail the "X types of beams" mentioned in the foregoing embodiments.

Optionally, an I^{th} type of beam in the X types of beams is determined based on a third matrix, a quantity of columns of the second antenna array, and a drive channel corresponding to the I^{th} type of beam, I is a positive integer, and I is less than or equal to X, where the third matrix is determined based on a preset matrix, the preset matrix is an N-length DFT matrix, the preset matrix indicates a matrix corresponding to N antennas in a same polarization direction, a distance between adjacent antennas in the N antennas in the same polarization direction is equal to a distance between adjacent antenna elements on a same antenna panel in the second antenna array, and N is greater than or equal to the quantity of columns and/or a quantity of rows of the second antenna array.

For example, the drive channel corresponding to the I^{th} type of beam may be understood as a drive channel related to the I^{th} type of beam. The I^{th} type of beam may correspond to a plurality of types of drive channels, and/or a plurality of types of beams in the X types of beams correspond to a same type of drive channels.

For example, the third matrix may be in the following two possible implementation forms:
In a possible implementation form, when the plurality of antenna elements in the second antenna array are evenly distributed, the third matrix is the preset matrix.

For example, in this possible implementation form, the second antenna array may include two possible implementation forms: The plurality of antenna elements in the second antenna array are all located in a same antenna panel. It may be understood that distances between adjacent antenna elements in the antenna array in the single antenna panel are equal. Alternatively, the plurality of antenna elements in the second antenna array are located in the plurality of antenna panels, and distances between adjacent antenna elements in the plurality of antenna elements are equal.

For example, a value of N may be the quantity of columns or the quantity of rows of the second antenna array. In this case, the preset matrix (namely, the third matrix) indicates a matrix corresponding to antennas in a same polarization direction in any row or any column of the second antenna array, that is, the preset matrix (namely, the third matrix) is *P_{N}*. For ease of description, the following uses an example in which the third matrix indicates a matrix corresponding to antennas in a same polarization direction in a first row or a first column of the second antenna array for description.

For example, in this possible implementation form, the I^{th} type of beam includes the following two implementations:
In an example, when I is equal to 1, that the I^{th} type of beam in the X types of beams is determined based on the third matrix, the quantity of columns of the second antenna array, and the drive channel corresponding to the I^{th} type of beam includes: A first type of beam is determined based on a fourth matrix and a first matrix set, where the first matrix set includes X matrices, and the fourth matrix is determined based on the third matrix and the quantity of columns of the second antenna array; and
a Z^{th} matrix in the X matrices is determined based on the preset matrix and a first driving quantity, the first driving quantity is a quantity of drive channels required for driving the first quantity of antenna elements by using a Z^{th} type of drive channel in the X types of drive channels, the Z^{th} type of drive channel is one type of drive channel in the X types of drive channels, the first quantity is equal to the quantity of rows of the second antenna array, Z is a positive integer, and Z is less than or equal to X.

For example, the second antenna array is an antenna array shown in FIG. 2. To be specific, the second antenna array is an antenna array with 24 rows and 10 columns. The value of X is 2, the X types of drive channels include a drive channel #1 and a drive channel #2, the drive channel #1 can drive three antenna elements, and the drive channel #2 can drive six antenna elements. The antenna elements driven by the drive channel #1 are located in columns 3 to 8 of the second antenna element, and the antenna elements driven by the drive channel #2 are located in columns 1, 2, 9, and 10 of the second antenna element.

Because the quantity of columns of the second antenna array is 10, that is, the fourth matrix is *P*₁₀; and because the value of X is 2, the first matrix set includes two matrices. A correspondence between the two matrices and two types of drive channels may include: (1) A matrix #1 is determined based on a quantity of drive channels (to be specific, the first driving quantity is 8) required for driving 24 antenna elements by using the drive channel #1, and a matrix #2 is determined based on a quantity of drive channels (to be specific, the first driving quantity is 4) required for driving the 24 antenna elements by using the drive channel #2; or (2) a matrix #1 is determined based on a quantity of drive channels (to be specific, the first driving quantity is 4) required for driving 24 antenna elements by using the drive channel #2, and a matrix #2 is determined based on a quantity of drive channels (to be specific, the first driving quantity is 8) required for driving the 24 antenna elements by using the drive channel #1. Therefore, the two matrices included in the first matrix set are *P*₄ and *P*₈, respectively. In other words, the first type of beam is determined based on *P*₁₀, *P*₄, and *P*₈.

For ease of description, the following uses an example in which the matrix determined based on the quantity of drive channels (to be specific, the first driving quantity is 8) required for driving the 24 antenna elements by using the drive channel #1 is referred to as a first submatrix, and the matrix determined based on the quantity of drive channels (to be specific, the first driving quantity is 4) required for driving the 24 antenna elements by using the drive channel #2 is referred to as a second submatrix for description.

Optionally, a first beam in the first type of beam is determined based on a first vector and a first vector set, the first vector is a column vector in the fourth matrix, the first vector set includes a column vector in each of the X matrices, and the first beam is one of the first type of beam.

Optionally, a quantity of beams of the first type of beam is equal to a product of the quantity of columns of the second antenna array and a second driving quantity, and the second driving quantity is a quantity of drive channels required for driving the first quantity of antenna elements by using a drive channel that is in the X types of drive channels and that drives a largest quantity of antenna elements.

For example, the quantity of columns of the second antenna array is 10, the value of X is 2, the drive channel #1 can drive three antenna elements, and the drive channel #2 can drive six antenna elements. In this case, the second driving quantity is a quantity of drive channels (to be specific, the second driving quantity is 4) required for driving the 24 antenna elements by using the drive channel #2. Therefore, the quantity of beams of the first type of beam is 40.

For example, the fourth matrix is *P*₁₀, and the two matrices included in the first matrix set are *P*₄ and *P*₈, respectively. A weight corresponding to the first beam may satisfy the following relationship (21): $\begin{matrix}Weight corresponding to the first beam e \\ = \left[Kron\left({P}_{10}^{f}\left\{1:2\right\},{P}_{4}^{g}\right),Kron\left({P}_{10}^{f}\left\{3:8\right\},{P}_{8}^{h}\right),Kron\left({P}_{10}^{f}\left\{9:10\right\},{P}_{4}^{g}\right)\right] , 64 \times 1\end{matrix}$ $e = 1 , 2 , … 40 ;$ $f = 1 , 2 , … 10 ;$ $g = 1 , 2 , 3 , 4 ;$ $h = 1 , 2 , … 8 ;$

In the relationship (21), ${P}_{10}^{f} \left\{1:2\right\}$ represents the first and the second elements in a *f*^{th} column of the fourth matrix, ${P}_{10}^{f} \left\{3:8\right\}$ represents the third to the eighth elements in the *f*^{th} column of the fourth matrix, ${P}_{10}^{f} \left\{9:10\right\}$ represents the ninth and the tenth elements in the *f*^{th} column of the fourth matrix, ${P}_{4}^{g}$ is a *f*^{th} column of vectors of the second submatrix, ${P}_{8}^{h}$ is an *h*^{th} column of vectors of the first submatrix, $Kron \left({P}_{10}^{f}\left\{1:2\right\},{P}_{4}^{g}\right)$ is a weight corresponding to a first column of antenna elements and a second column of antenna elements in the second antenna array (or a drive channel that drives the first column of antenna elements and the second column of antenna elements) in Weight corresponding to the first beam, $Kron \left({P}_{10}^{f}\left\{3:8\right\},{P}_{8}^{h}\right)$ is a weight corresponding to a third column of antenna elements to an eighth column of antenna elements in the second antenna array (or a drive channel that drives the third column of antenna elements to the eighth column of antenna elements) in Weight corresponding to the first beam, and $Kron \left({P}_{10}^{f}\left\{9:10\right\},{P}_{4}^{g}\right)$ is a weight corresponding to a ninth column of antenna elements and a tenth column of antenna elements in the second antenna array (or a drive channel that drives the ninth column of antenna elements and the tenth column of antenna elements) in Weight corresponding to the first beam.

It may be understood that, in the relationship (21), ${P}_{4}^{g}$ one-to-one corresponds to ${P}_{8}^{h}$, that is, different values of *g*correspond to one unique *h.* In other words, in the relationship (21), actually, only four columns of vectors in ${P}_{8}^{h}$ participate in determining the first beam *e.*

In another example, when I is greater than 1, that the I^{th} type of beam in the X types of beams is determined based on the third matrix, the quantity of columns of the second antenna array, and the drive channel corresponding to the I^{th} type of beam includes: The I^{th} type of beam is determined based on a fifth matrix and a second matrix set, and the second matrix set includes X-I+1 matrices, where
the fifth matrix is determined based on the third matrix and a first difference, the first difference is a difference between the quantity of columns of the second antenna array and a first column quantity, the first column quantity is a quantity of columns occupied in the second antenna array by an antenna element driven by an I-1 type of drive channel, and the I-1 type of drive channel is a first I-1 type of drive channel that drives a largest quantity of antenna elements in the X types of drive channels; and
a Y^{th} matrix in the X-I+1 matrices is determined based on the preset matrix and a third driving quantity, the third driving quantity is a quantity of drive channels required for driving the first quantity of antenna elements by using a Y^{th} type of drive channel in a X-I+1 type of drive channel, the X-I+1 type of drive channel is a drive channel in the X types of drive channels other than the I-1 type of drive channel, the Y^{th} type of drive channel is one type of drive channel in the X-I+1 type of drive channel, the first quantity is equal to the quantity of rows of the second antenna array, Y is a positive integer, and Y is less than or equal to X-I+1.

For example, the second antenna array is an antenna array shown in FIG. 2. To be specific, the second antenna array is an antenna array with 24 rows and 10 columns. The value of X is 2, the X types of drive channels include a drive channel #1 and a drive channel #2, the drive channel #1 can drive three antenna elements, and the drive channel #2 can drive six antenna elements. The antenna elements driven by the drive channel #1 are located in columns 3 to 8 of the second antenna element, and the antenna elements driven by the drive channel #2 are located in columns 1, 2, 9, and 10 of the second antenna element.

In this case, the I-1 type of drive channel is a type of drive channel that drives a largest quantity of antenna elements in two types of drive channels (the drive channel #1 and the drive channel #2). Therefore, the I-1 type of drive channel is the drive channel #2, and the first column quantity is a quantity of columns occupied by the antenna elements driven by the drive channel #2 in the second antenna array. Therefore, the first column quantity is 4, and the first difference is 6. Therefore, the fifth matrix is *P*₆.

The second matrix set includes one matrix. Because the X-I+1 type of drive channel is a drive channel other than the I-1 type of drive channel in the X types of drive channels, and the X-I+1 type of drive channel is the drive channel #1, that is, the Y^{th} type of drive channel is also the drive channel #1, the third driving quantity is 8. Therefore, the one matrix included in the second matrix set is *P*₈. In other words, a second type of beam is determined based on *P*₆and *P*₈. Optionally, a beam quantity of the I^{th} type of beam is equal to a product of the first difference and a second difference, and the second difference is a difference between a fourth driving quantity and a fifth driving quantity, where the fourth driving quantity is a quantity of drive channels required for driving the first quantity of antenna elements by using a drive channel that drives a largest quantity of antennas in the X-I+1 type of drive channel, and the fifth driving quantity is a quantity of drive channels required for driving the first quantity of antenna elements by using a drive channel that drives a smallest quantity of antenna elements in the I-1 type of drive channel.

For example, the quantity of columns of the second antenna array is 10, the value of X is 2, the drive channel #1 can drive three antenna elements, and the drive channel #2 can drive six antenna elements. In this case, the fourth driving quantity is a quantity of drive channels (to be specific, the fourth driving quantity is 8) required for driving the 24 antenna elements by using the drive channel #1, and the fifth driving quantity is a quantity of drive channels (to be specific, the fifth driving quantity is 4) required for driving the 24 antenna elements by using the drive channel #2. Therefore, the second difference is 4. Further, it is learned that a quantity of beams of the second type of beam is 24.

Optionally, a second beam in the I^{th} type of beam is determined based on a second vector and a second vector set, the second vector is a column vector in the fifth matrix, the second vector set includes a column vector in each of the X-I+1 matrices, and the second beam is one of the I^{th} type of beam.

For example, the fifth matrix is *P*₆, and the one matrix included in the second matrix set is *P*₈. The second beam may satisfy the following relationship (22): $Second beam q = \left[Kron\left(0, 0\right),Kron\left({P}_{6}^{s}, {P}_{8}^{h}\right),Kron\left(0, 0\right)\right] , 64 \times 1 ,$ $q = 1 , 2 , … 24 ;$ $s = 1 , 2 , … 6 ;$ $h = 1 , 2 , … 8 ;$

In the relationship (22), in Weight corresponding to the first beam *q*, a weight corresponding to a first column of antenna elements and a second column of antenna elements in the second antenna array (or a drive channel that drives the first column of antenna elements and the second column of antenna elements), and a weight corresponding to a ninth column of antenna elements and a tenth column of antenna elements (or a drive channel that drives the ninth column of antenna elements and the tenth column of antenna elements) are both 0, and therefore are both represented by *Kron*(0,0).${P}_{6}^{s}$ is an *s*^{th} column vector in the fifth matrix, ${P}_{8}^{h}$ is an *h*^{th} column vector in the first submatrix, and $Kron \left({P}_{6}^{s}, {P}_{8}^{h}\right)$ is a weight corresponding to a third column of antenna elements to an eighth column of antenna elements in the second antenna array (or a drive channel that drives the third column of antenna elements to the eighth column of antenna elements).

It may be understood that, because only four columns of vectors in ${P}_{8}^{h}$ participate in determining the first beam *e*, in the relationship (20), the remaining four columns of vectors that are in ${P}_{8}^{h}$ and that do not participate in determining the first beam are used to determine the second beam *q*.

For example, when the second antenna array is shown in (a) in FIG. 17, it can be learned from the foregoing that the second antenna array corresponds to 40 first beams and 24 second beams, that is, beams shown in (b) in FIG. 17. It can be learned from the related descriptions of the relationship (21) that only the four columns of vectors participate in determining the first beam. In this case, for the drive channel, it may be considered that all the antenna elements in the second antenna array are driven by the drive channel #1, that is, as shown in (f) in FIG. 17. Therefore, the 40 first beams are determined based on the relationship (21), as shown in (e) in FIG. 17.

It can be learned from the related descriptions of the relationship (22) that the remaining four columns of vectors that are in ${P}_{8}^{h}$ and that do not participate in determining the first beam participate in determining the second beam. In this case, for the drive channel, it may be considered that weights that are of first, second, ninth, and tenth columns of antenna elements in the second antenna array and that correspond to the second beams are 0. In this case, it may be considered that the first, second, ninth, and tenth columns of antenna elements in the second antenna array do not exist, that is, as shown in (d) in FIG. 17. Therefore, the 24 second beams are determined based on the relationship (22), as shown in (c) in FIG. 17.

In another possible implementation form, when the plurality of antenna elements in the second antenna array are not evenly distributed, the third matrix is determined based on the preset matrix. To be specific, the plurality of antenna elements in the second antenna array are located on the plurality of antenna panels, and the distance between the first adjacent antenna elements in the second antenna array is different from the distance between the second adjacent antenna elements.

For example, for implementation of the first adjacent antenna elements and the second adjacent antenna elements, refer to the related descriptions in the embodiment shown in FIG. 7. Details are not described herein again.

For example, in this possible implementation form, a value of N may be a quantity of rows or a quantity of columns of an antenna array in any one of the plurality of antenna panels. To be specific, the preset matrix indicates a matrix corresponding to antennas in a same polarization direction in any row and/or any column of the single antenna panel. Correspondingly, the third matrix indicates a matrix corresponding to antennas in a same polarization direction in any row and/or any column of the second antenna array. For ease of description, the following uses an example in which the preset matrix indicates a matrix corresponding to antennas in a same polarization direction in a first row and/or a first column in the single antenna panel, and the third matrix indicates a matrix corresponding to antennas in a same polarization direction in a first row and/or a first column in the second antenna array for description.

For example, the third matrix may be implemented based on the following three cases:
Case 1: The plurality of antenna panels are distributed at the equal interval in the horizontal direction. In other words, adjacent antenna panels in the plurality of antenna panels are adjacent in the horizontal direction.

Optionally, in Case 1, the third matrix is determined based on the preset matrix and phase offsets of other antenna panels in the plurality of antenna panels other than a first antenna panel relative to the first antenna panel.

For example, in this case, the preset matrix indicates a matrix corresponding to antennas in a same polarization direction in a first row in the single antenna panel, and the third matrix indicates a matrix corresponding to antennas in a same polarization direction in a first row in the second antenna array. To be specific, the preset matrix in Case 1 is the matrix corresponding to the first group of antennas in Scenario 1, and the third matrix in Case 1 is the matrix corresponding to the second group of antennas in Scenario 1. Specifically, for implementation of the preset matrix and the third matrix in Case 1, refer to the related descriptions in Scenario 1. Details are not described herein again.

For example, in Case 1, implementation of an I^{th} beam is the same as implementation of the I^{th} beam in the foregoing possible implementation. For details, refer to the related descriptions in the foregoing possible implementation. Details are not described herein again.

Case 2: The plurality of antenna panels are distributed at the equal interval in the vertical direction. In other words, adjacent antenna panels in the plurality of antenna panels are adjacent in the vertical direction.

Optionally, in Case 2, the third matrix is determined based on the preset matrix and phase offsets of other antenna panels in the plurality of antenna panels other than a third antenna panel relative to the third antenna panel.

For example, in this case, the preset matrix indicates a matrix corresponding to antennas in a same polarization direction in a first column of the single antenna panel, and the third matrix indicates a matrix corresponding to antennas in a same polarization direction in a first column of the second antenna array. To be specific, the preset matrix in Case 2 is the matrix corresponding to the fourth group of antennas in Scenario 2, and the third matrix in Case 2 is the matrix corresponding to the fifth group of antennas in Scenario 2. Specifically, for implementation of the preset matrix and the third matrix in Case 2, refer to the related descriptions in Scenario 2. Details are not described herein again.

For example, in Case 2, implementation of an I^{th} beam is the same as implementation of the I^{th} beam in the foregoing possible implementation. For details, refer to the related descriptions in the foregoing possible implementation. Details are not described herein again.

Case 3: In the plurality of antenna panels, the antenna panels at the same horizontal position are distributed at the equal interval, and the antenna panels at the same vertical position are distributed at the equal interval.

Optionally, in Case 3, the preset matrix includes a first preset matrix and a second preset matrix. The first preset matrix indicates a matrix corresponding to antennas in a same polarization direction in a first row of the single antenna panel, and the second preset matrix indicates a matrix corresponding to antennas in a same polarization direction in a first column of the single antenna panel.

The third matrix includes a third matrix #1 and a third matrix #2. The third matrix #1 is determined based on the first preset matrix, and the third matrix #1 indicates a matrix corresponding to antennas in a same polarization direction in a first row of the second antenna array. The third matrix #2 is determined based on the second preset matrix, and the third matrix #2 indicates a matrix corresponding to antennas in a same polarization direction in a first column of the second antenna array.

Specifically, for implementation of the preset matrix and the third matrix in Case 3, refer to the related descriptions in Case 1 and Case 2. Details are not described herein again.

Optionally, in a possible implementation, the fourth indication information further indicates the width of the antenna panel in the plurality of antenna panels and the distance between the first adjacent antenna elements. Alternatively, the width of the antenna panel in the plurality of antenna panels and the distance between the first adjacent antenna elements may be indicated by indication information other than the fourth indication information.

For example, in this optional solution, implementation of the indication information indicating the width of the antenna panel in the plurality of antenna panels and the distance between the first adjacent antenna elements is similar to implementation of the first indication information. For details, refer to the related descriptions of the first indication information. Details are not described herein again.

For example, in Case 3, the I^{th} type of beam includes the following two implementations:
In an example, when I is equal to 1, that the I^{th} type of beam in the X types of beams is determined based on the third matrix, the quantity of columns of the second antenna array, and the drive channel corresponding to the I^{th} type of beam includes: A first type of beam is determined based on a sixth matrix and a third matrix set, where the third matrix set includes X matrices; a fifth matrix is determined based on the third matrix #1 and the quantity of rows of the second antenna array; and
a Z^{th} matrix in the X matrices is determined based on the third matrix #2 and a first driving quantity, where the first driving quantity is a quantity of drive channels required for driving a first quantity of antenna elements by using a Z^{th} type of drive channel in the X types of drive channels, the Z^{th} type of drive channel is one type of drive channel in the X types of drive channels, the first quantity is equal to the quantity of rows of the second antenna array, Z is a positive integer, and Z is less than or equal to X.

In an example, when I is greater than 1, that the I^{th} type of beam in the X types of beams is determined based on the third matrix, the quantity of columns of the second antenna array, and the drive channel corresponding to the I^{th} type of beam includes: The I^{th} type of beam is determined based on a seventh matrix and a fourth matrix set, where the fourth matrix set includes X-I+1 matrices;
a fifth matrix is determined based on the third matrix #1 and a first difference, the first difference is a difference between the quantity of columns of the second antenna array and a first column quantity, the first column quantity is a quantity of columns occupied in the second antenna array by an antenna element driven by an I-1 type of drive channel, and the I-1 type of drive channel is a first I-1 type of drive channel that drives a largest quantity of antenna elements in the X types of drive channels; and
a Y^{th} matrix in the X-I+1 matrices is determined based on the third matrix #2 and a third driving quantity, the third driving quantity is a quantity of drive channels required for driving the first quantity of antenna elements by using a Y^{th} type of drive channel in a X-I+1 type of drive channel, the X-I+1 type of drive channel is a drive channel in the X types of drive channels other than the I-1 type of drive channel, the Y^{th} type of drive channel is one type of drive channel in the X-I+1 type of drive channel, the first quantity is equal to the quantity of rows of the second antenna array, Y is a positive integer, and Y is less than or equal to X-I+1.

For example, implementation of an I^{th} beam in Case 3 is similar to implementation of the I^{th} beam in the foregoing possible implementation. For details, refer to the related descriptions in the foregoing possible implementation. Details are not described herein again.

The foregoing provides descriptions by using only an example in which the second antenna array is the antenna array shown in FIG. 2. Actually, the second antenna array may alternatively be an antenna array other than the antenna array in FIG. 2. For example, the value of X may be a value other than 2, and the quantity of rows of the second antenna array may be a value other than 24. Similarly, the quantity of columns of the second antenna array may be a value other than 10, and the type of the drive channel may alternatively be a type other than the foregoing exception. This is not limited in embodiments of this application.

It may be understood that the antenna element and the drive channel in embodiments of this application may also be represented as an antenna port (antenna port), or may be represented as a port (port). This is not limited.

It should be noted that, the matrix ${P}_{W}^{v}$ in the relationship in embodiments of this application is used to represent a *v*^{th} column vector of the matrix *P_{w}* in the matrix *P_{w}*. For example, in the relationship (21), ${P}_{4}^{g}$ is the *f*^{th} column vector of the second submatrix, and ${P}_{8}^{h}$ is the *h*^{th} column vector of the first submatrix. Actually, the matrix ${P}_{W}^{v}$ may alternatively be used to represent a *v*^{th} row vector of the matrix *P_{w}* in the matrix *P_{w}*. In this case, in the relationship (21), ${P}_{4}^{g}$ is a *f*^{th} row vector of the second submatrix, and ${P}_{8}^{h}$ is an *h*^{th} row vector of the first submatrix. The foregoing uses only the uneven matrix in the relationship (21) In an example for description. Actually, any matrix ${P}_{W}^{v}$ in the relationship (1) to the relationship (22) may represent a *v*^{th} row vector of the matrix *P_{w}* in the matrix *P_{w}*. Details are not described herein again.

It may be understood that, in the foregoing embodiments, the methods and/or steps implemented by the first device (namely, the terminal device or the network device) may alternatively be implemented by any one of components (for example, a processor, a chip, a chip system, a circuit, a logical module, or software like a chip or a circuit) that may be used in the first device.

The foregoing mainly describes the solutions provided in this application. Correspondingly, this application further provides a communication apparatus, and the communication apparatus is configured to implement the foregoing methods.

The communication apparatus may be the first device in the foregoing method embodiment, an apparatus including the first device, or any one of components that may be used in the first device, for example, a chip or a chip system.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into modules is an example, and is merely logical function division. In actual implementation, another division manner may be used.

FIG. 18 is a diagram of a structure of a communication apparatus 180. The communication apparatus 180 includes a processing module 1801 and a transceiver module 1802. The communication apparatus 180 may be configured to implement a function of the first device.

In some embodiments, the communication apparatus 180 may further include a storage module (not shown in FIG. 18), configured to store program instructions and data.

In some embodiments, the transceiver module 1802 may also be referred to as a transceiver unit, and is configured to implement a sending function and/or a receiving function. The transceiver module 1802 may include a transceiver circuit, a transceiver machine, a transceiver, or a communication interface.

In some embodiments, the transceiver module 1802 may include a receiving module and a sending module that are respectively configured to perform the receiving and sending steps performed by the first device in the foregoing method embodiments, and/or configured to support another process of the technology described in this specification. The processing module 1801 may be configured to perform the processing (for example, determining or generation) steps performed by the first device in the foregoing method embodiments, and/or configured to support another process of the technology described in this specification.

When the communication apparatus 180 is configured to implement the function of the first device,

in some embodiments, the processing module 1801 is configured to obtain downlink channel state information. The processing module 1801 is further configured to determine, based on the downlink channel state information, a first precoding matrix from a first matrix corresponding to a first antenna array, where the first matrix includes a plurality of precoding matrices, a plurality of antenna elements in the first antenna array are located on a plurality of antenna panels, a distance between first adjacent antenna elements in the plurality of antenna elements is different from a distance between second adjacent antenna elements, the first adjacent antenna elements are adjacent antenna elements on adjacent antenna panels in the plurality of antenna panels, the second adjacent antenna elements are adjacent antenna elements on a same antenna panel in the plurality of antenna panels, and the first matrix is determined based on a width of the antenna panel in the plurality of antenna panels and the distance between the first adjacent antenna elements.

Optionally, the transceiver module 1802 is configured to: receive first indication information, where the first indication information indicates the width of the antenna panel and a distance between first adjacent antennas; and determine, based on the first indication information, the first matrix corresponding to the first antenna array.

Optionally, the transceiver module 1802 is further configured to receive second indication information, where the second indication information indicates the first matrix corresponding to the first antenna array.

Optionally, the first indication information or the second indication information is carried in RRC signaling or MAC-CE signaling.

Optionally, the transceiver module 1802 is further configured to send third indication information, where the third indication information indicates the first precoding matrix.

Optionally, the first adjacent antenna elements include a first antenna element and a second antenna element, the first antenna element and the second antenna element are located on different antenna panels, and the first antenna element and the second antenna element are adjacent.

Optionally, the width of the antenna panel in the plurality of antenna panels is determined based on the distance between the second adjacent antenna elements and a quantity of rows or columns of an antenna element in the antenna panel.

Optionally, when the adjacent antenna panels are adjacent in a horizontal direction, the width of the antenna panel in the plurality of antenna panels is a width of the antenna panel in the plurality of antenna panels in the horizontal direction, and the first adjacent antenna elements are adjacent antenna elements in the adjacent antenna panels in the horizontal direction.

Optionally, the first matrix corresponding to the first antenna array is determined based on a preset matrix, a quantity of rows of the first antenna array, and phase offsets of other antenna panels in the plurality of antenna panels other than a first antenna panel relative to the first antenna panel, where the first antenna panel is a preset first reference antenna panel in the plurality of antenna panels; the preset matrix is an N-length discrete Fourier transform DFT matrix, the preset matrix is a matrix corresponding to N antennas in a same polarization direction, a distance between adjacent antennas in the N antennas in the same polarization direction is equal to a distance between second adjacent antennas, and N is an integer greater than 1; and a phase offset of a second antenna panel in the other antenna panels relative to the first antenna panel is determined based on the width of the antenna panel in the plurality of antenna panels and a distance between third adjacent antenna elements, the third adjacent antenna elements include a distance between two closest antenna elements that are respectively located in the first antenna panel and the second antenna panel, the second antenna panel is any one of the other antenna panels, and the distance between the third adjacent antenna elements is determined based on a distance between first adjacent antennas.

Optionally, when the adjacent antenna panels are adjacent in a vertical direction, the width of the antenna panel in the plurality of antenna panels is a width of the antenna panel in the plurality of antenna panels in the vertical direction, and the first adjacent antennas are adjacent antennas in the adjacent antenna panels in the vertical direction.

Optionally, the first matrix corresponding to the first antenna array is determined based on a preset matrix, a quantity of columns of the first antenna array, and phase offsets of other antenna panels in the plurality of antenna panels other than a third antenna panel relative to the third antenna panel, where the third antenna panel is a preset second reference antenna panel in the plurality of antenna panels; the preset matrix is an N-length discrete Fourier transform DFT matrix, the preset matrix is a matrix corresponding to N antennas in a same polarization direction, a distance between adjacent antennas in the N antennas in the same polarization direction is equal to a distance between second adjacent antennas, and N is an integer greater than 1; and a phase offset of a fourth antenna panel in the other antenna panels relative to the third antenna panel is determined based on the width of the antenna panel in the plurality of antenna panels and a distance between fourth adjacent antenna elements, the fourth adjacent antenna elements include two closest antennas that are respectively located in the third antenna panel and the fourth antenna panel, the fourth antenna panel is any one of the other antenna panels, and the distance between the fourth adjacent antenna elements is determined based on the distance between the first adjacent antenna elements.

Optionally, each precoding matrix in the plurality of precoding matrices indicates one group of beams; and correspondingly, the first precoding matrix indicates a 1^{st} group of beams in the plurality of groups of beams indicated by the plurality of precoding matrices.

In some other embodiments, the processing module 1801 is configured to obtain downlink channel state information; and the processing module 1801 is further configured to determine, based on the downlink channel state information, a second precoding matrix from a second matrix corresponding to a second antenna array, where the second matrix includes a plurality of precoding matrices, the plurality of precoding matrices correspond to X types of beams, and X is a positive integer greater than 1.

Optionally, the transceiver module 1802 is configured to: receive fourth indication information, where the fourth indication information indicates a driving relationship between X types of drive channels and a plurality of antenna elements in the second antenna array; and determine, based on the second indication information, the second matrix corresponding to the second antenna array.

Optionally, the fourth indication information indicates a quantity of columns occupied by the antenna elements that are separately driven by the X types of drive channels in the second antenna array and a quantity of channels required for separately driving the first quantity of antenna elements by using the X types of drive channels, where the first quantity is equal to a quantity of rows of the second antenna array.

Optionally, the fourth indication information further indicates a width of an antenna panel in a plurality of antenna panels and a distance between first adjacent antenna elements, and the first adjacent antenna elements are adjacent antenna elements on adjacent antenna panels in the plurality of antenna panels.

Optionally, the transceiver module 1802 is further configured to receive fifth indication information, where the fifth indication information indicates the second matrix corresponding to the second antenna array.

Optionally, the fourth indication information or the fifth indication information is carried in RRC signaling or MAC-CE signaling.

Optionally, the transceiver module 1802 is further configured to send sixth indication information, where the sixth indication information indicates the second precoding matrix.

Optionally, the plurality of antenna elements in the second antenna array are driven by the X types of drive channels, and the X types of drive channels separately drive different quantities of antenna elements.

Optionally, an I^{th} type of beam in the X types of beams is determined based on a third matrix, a quantity of columns of the second antenna array, and a drive channel corresponding to the I^{th} type of beam, I is a positive integer, and I is less than or equal to X, where the third matrix is determined based on a preset matrix, the preset matrix is an N-length discrete Fourier transform DFT matrix, the preset matrix indicates a matrix corresponding to N antennas in a same polarization direction, a distance between adjacent antennas in the N antennas in the same polarization direction is equal to a distance between adjacent antennas on a same antenna panel in the second antenna array, and N is greater than or equal to the quantity of columns and/or a quantity of rows of the second antenna array.

Optionally, when the plurality of antenna elements in the second antenna array are all located on a same antenna panel, the third matrix is the preset matrix; or when the plurality of antenna elements in the second antenna array are located on a plurality of antenna panels, and distances between adjacent antenna elements in the plurality of antenna elements are equal, the third matrix is the preset matrix.

Optionally, when the plurality of antenna elements in the second antenna array are located on a plurality of antenna panels, a distance between first adjacent antenna elements in the plurality of antenna panels is different from a distance between second adjacent antenna elements, the first adjacent antenna elements are adjacent antenna elements on adjacent antenna panels in the plurality of antenna panels, and the second adjacent antenna elements are adjacent antenna elements on a same antenna panel in the plurality of antenna panels, the third matrix is determined based on the preset matrix and phase offsets of other antenna panels other than a first antenna panel in the plurality of antenna panels relative to the first antenna panel, where the first antenna panel is a preset first reference antenna panel in the plurality of antenna panels; and a phase offset of a second antenna panel in the other antenna panels relative to the first antenna panel is determined based on a width of the antenna panel in the plurality of antenna panels and a distance between third adjacent antenna elements, the third adjacent antenna elements include a distance between two closest antenna elements that are respectively located in the first antenna panel and the second antenna panel, the second antenna panel is any one of the other antenna panels, and the distance between the third adjacent antenna elements is determined based on a distance between first adjacent antennas.

Optionally, when the plurality of antenna elements in the second antenna array are located on a plurality of antenna panels, a distance between first adjacent antenna elements in the plurality of antenna panels is different from a distance between second adjacent antenna elements, the first adjacent antenna elements are adjacent antenna elements on adjacent antenna panels in the plurality of antenna panels, and the second adjacent antenna elements are adjacent antenna elements on a same antenna panel in the plurality of antenna panels, the third matrix is determined based on the preset matrix and phase offsets of other antenna panels other than a third antenna panel in the plurality of antenna panels relative to the third antenna panel, where the third antenna panel is a preset second reference antenna panel in the plurality of antenna panels; the preset matrix is an N-length discrete Fourier transform DFT matrix, the preset matrix is a matrix corresponding to N antennas in a same polarization direction, a distance between adjacent antennas in the N antennas in the same polarization direction is equal to a distance between second adjacent antennas, and N is an integer greater than 1; and a phase offset of a fourth antenna panel in the other antenna panels relative to the third antenna panel is determined based on the width of the antenna panel in the plurality of antenna panels and a distance between fourth adjacent antenna elements, the fourth adjacent antenna elements include two closest antennas that are respectively located in the third antenna panel and the fourth antenna panel, the fourth antenna panel is any one of the other antenna panels, and the distance between the fourth adjacent antenna elements is determined based on the distance between the first adjacent antenna elements.

Optionally, when I is equal to 1, that the I^{th} type of beam in the X types of beams is determined based on the third matrix, the quantity of columns of the second antenna array, and the drive channel corresponding to the I^{th} type of beam includes: A first type of beam is determined based on a fourth matrix and a first matrix set, where the first matrix set includes X matrices, and the fourth matrix is determined based on the third matrix and the quantity of columns of the second antenna array; and a Z^{th} matrix in the X matrices is determined based on the preset matrix and a first driving quantity, the first driving quantity is a quantity of drive channels required for driving a first quantity of antenna elements by using a Z^{th} type of drive channel in the X types of drive channels, the Z^{th} type of drive channel is one type of drive channel in the X types of drive channels, the first quantity is equal to the quantity of rows of the second antenna array, Z is a positive integer, and Z is less than or equal to X.

Optionally, when I is equal to 1, that the I^{th} type of beam in the X types of beams is determined based on the third matrix, the quantity of columns of the second antenna array, and the drive channel corresponding to the I^{th} type of beam includes: A first type of beam is determined based on a sixth matrix and a third matrix set, where the third matrix set includes X matrices; a fifth matrix is determined based on a third matrix #1 and the quantity of rows of the second antenna array; and a Z^{th} matrix in the X matrices is determined based on a third matrix #2 and a first driving quantity, where the first driving quantity is a quantity of drive channels required for driving a first quantity of antenna elements by using a Z^{th} type of drive channel in the X types of drive channels, the Z^{th} type of drive channel is one type of drive channel in the X types of drive channels, the first quantity is equal to the quantity of rows of the second antenna array, Z is a positive integer, and Z is less than or equal to X.

Optionally, a first beam in the first type of beam is determined based on a first vector and a first vector set, the first vector is a column row vector in the fourth matrix, the first vector set includes a column vector in each of the X matrices, and the first beam is one of the first type of beam.

Optionally, a quantity of beams of the first type of beam is equal to a product of the quantity of columns of the second antenna array and a second driving quantity, and the second driving quantity is a quantity of drive channels required for driving the first quantity of antenna elements by using a drive channel that is in the X types of drive channels and that drives a largest quantity of antenna elements.

Optionally, when I is greater than 1, that the I^{th} type of beam in the X types of beams is determined based on the third matrix, the quantity of columns of the second antenna array, and the drive channel corresponding to the I^{th} type of beam includes: The I^{th} type of beam is determined based on a fifth matrix and a second matrix set, and the second matrix set includes X-I+1 matrices, where the fifth matrix is determined based on the third matrix and a first difference, the first difference is a difference between the quantity of columns of the second antenna array and a first column quantity, the first column quantity is a quantity of columns occupied in the second antenna array by an antenna element driven by an I-1 type of drive channel, and the I-1 type of drive channel is a first I-1 type of drive channel that drives a largest quantity of antenna elements in the X types of drive channels; and a Y^{th} matrix in the X-I+1 matrices is determined based on the preset matrix and a third driving quantity, the third driving quantity is a quantity of drive channels required for driving the first quantity of antenna elements by using a Y^{th} type of drive channel in a X-I+1 type of drive channel, the X-I+1 type of drive channel is a drive channel in the X types of drive channels other than the I-1 type of drive channel, the Y^{th} type of drive channel is one type of drive channel in the X-I+1 type of drive channel, the first quantity is equal to the quantity of rows of the second antenna array, Y is a positive integer, and Y is less than or equal to X-I+1.

Optionally, when I is greater than 1, that the I^{th} type of beam in the X types of beams is determined based on the third matrix, the quantity of columns of the second antenna array, and the drive channel corresponding to the I^{th} type of beam includes: The I^{th} type of beam is determined based on a seventh matrix and a fourth matrix set, where the fourth matrix set includes X-I+1 matrices; a fifth matrix is determined based on the third matrix #1 and a first difference, the first difference is a difference between the quantity of columns of the second antenna array and a first column quantity, the first column quantity is a quantity of columns occupied in the second antenna array by an antenna element driven by an I-1 type of drive channel, and the I-1 type of drive channel is a first I-1 type of drive channel that drives a largest quantity of antenna elements in the X types of drive channels; and a Y^{th} matrix in the X-I+1 matrices is determined based on the third matrix #2 and a third driving quantity, the third driving quantity is a quantity of drive channels required for driving the first quantity of antenna elements by using a Y^{th} type of drive channel in a X-I+1 type of drive channel, the X-I+1 type of drive channel is a drive channel in the X types of drive channels other than the I-1 type of drive channel, the Y^{th} type of drive channel is one type of drive channel in the X-I+1 type of drive channel, the first quantity is equal to the quantity of rows of the second antenna array, Y is a positive integer, and Y is less than or equal to X-I+1.

Optionally, a second beam in the I^{th} type of beam is determined based on a second vector and a second vector set, the second vector is a column vector in the fifth matrix, the second vector set includes a column vector in each of the X-I+1 matrices, and the second beam is one of the I^{th} type of beam.

Optionally, a beam quantity of the I^{th} type of beam is equal to a product of the first difference and a second difference, and the second difference is a difference between a fourth driving quantity and a fifth driving quantity, where the fourth driving quantity is a quantity of drive channels required for driving the first quantity of antenna elements by using a drive channel that drives a largest quantity of antennas in the X-I+1 type of drive channel, and the fifth driving quantity is a quantity of drive channels required for driving the first quantity of antenna elements by using a drive channel that drives a smallest quantity of antenna elements in the I-1 type of drive channel.

Optionally, the driving relationship between the plurality of antenna elements in the second antenna array includes: distribution, in the second antenna array, of antenna elements that are separately driven by the X types of drive channels and that are in the plurality of antenna elements.

Optionally, each precoding matrix in the plurality of precoding matrices indicates one group of beams; and correspondingly, the second precoding matrix indicates a 2^{nd} group of beams in the plurality of groups of beams indicated by the plurality of precoding matrices, and the 2^{nd} group of beams includes at least one type of beam in the X types of beams.

With reference to the foregoing two embodiments, optionally, the first reference antenna panel is a leftmost or rightmost antenna panel in the plurality of antenna panels.

With reference to the foregoing two embodiments, optionally, when the distance between the third adjacent antenna elements is equal to the distance between the first adjacent antenna elements, the phase offset of the second antenna panel relative to the first antenna panel is determined based on a phase relationship between the second antenna panel and the first antenna panel, and the phase relationship between the second antenna panel and the first antenna panel is determined based on the width of the antenna panel in the plurality of antenna panels in the horizontal direction and the distance between the first adjacent antenna elements.

With reference to the foregoing two embodiments, optionally, the phase relationship between the second antenna panel and the first antenna panel satisfies the following relationship: ${{θ}_{n}^{1}}^{˜} = 2 π ∗ \frac{n}{N} ∗ \frac{\left({L}_{N}+{D}_{H}\right)}{{D}_{A}} , n = 0 , 1 , … , N - 1$ ${{θ}_{n}^{1}}^{˜}$ represents the phase relationship between the second antenna panel and the first antenna panel, *L_{N}* represents the width of the antenna panel in the plurality of antenna panels in the horizontal direction, *D_{H}* represents the distance between the first adjacent antenna elements, *N* represents a quantity of columns of an antenna array in each of the plurality of antenna panels, and *D_{A}* represents the distance between the second adjacent antenna elements.

With reference to the foregoing two embodiments, optionally, the second reference antenna panel is an uppermost or lowermost antenna panel in the plurality of antenna panels.

With reference to the foregoing two embodiments, optionally, when the distance between the fourth adjacent antenna elements is equal to the distance between the first adjacent antenna elements, the phase offset of the fourth antenna panel relative to the third antenna panel is determined based on a phase relationship between the fourth antenna panel and the third antenna panel, and the phase relationship between the fourth antenna panel and the third antenna panel is determined based on the width of the antenna panel in the plurality of antenna panels in the vertical direction and the distance between the first adjacent antenna elements.

With reference to the foregoing two embodiments, optionally, the phase relationship between the fourth antenna panel and the third antenna panel satisfies the following relationship: ${{θ}_{n}^{2}}^{˜} = 2 π ∗ \frac{n}{N} ∗ \frac{\left({L}_{M}+{D}_{V}\right)}{{D}_{A}} , n = 0 , 1 , … , N - 1$${{θ}_{n}^{2}}^{˜}$ represents the phase relationship between the fourth antenna panel and the third antenna panel, *L_{M}* represents the width of the antenna panel in the plurality of antenna panels in the vertical direction, *D_{V}* represents a distance between the first adjacent antennas, *M* represents a quantity of columns of an antenna array in each of the plurality of antenna panels, and *D_{A}* represents the distance between the second adjacent antennas.

With reference to the foregoing two embodiments, optionally, obtaining the downlink channel state information includes: receiving downlink channel reference information; and determining the downlink channel state information based on the downlink channel reference information.

With reference to the foregoing two embodiments, optionally, obtaining the downlink channel state information includes: receiving uplink channel reference information; and determining the downlink channel state information based on the uplink channel reference information.

With reference to the foregoing two embodiments, optionally, the transceiver module 1802 is further configured to receive downlink channel reference information; and the processing module 1801 is further configured to determine the downlink channel state information based on the downlink channel reference information.

With reference to the foregoing two embodiments, optionally, the transceiver module 1802 is further configured to receive uplink channel reference information; and the processing module 1801 is further configured to determine the downlink channel state information based on the uplink channel reference information.

All related content of the steps in the foregoing method embodiments may be cited in function descriptions of the corresponding functional modules. Details are not described herein again.

In this application, the communication apparatus 180 may be presented in a form of the functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another component that can provide the foregoing functions.

In some embodiments, when the communication apparatus 180 in FIG. 18 is a chip or a chip system, a function/implementation process of the transceiver module 1802 may be implemented via an input/output interface (or a communication interface) of the chip or the chip system, and a function/implementation process of the processing module 1801 may be implemented via a processor (or a processing circuit) of the chip or the chip system.

Because the communication apparatus 180 provided in this embodiment may perform the foregoing methods, for technical effect that can be obtained by the communication apparatus 180, refer to the foregoing method embodiments. Details are not described herein again.

In a possible product form, the first device in embodiments of this application may be alternatively implemented by using the following: one or more field programmable gate arrays (field programmable gate array, FPGA), a programmable logic device (programmable logic device, PLD), a controller, a state machine, gate logic, a discrete hardware component, any other suitable circuit, or any combination of circuits that can perform various functions described throughout this application.

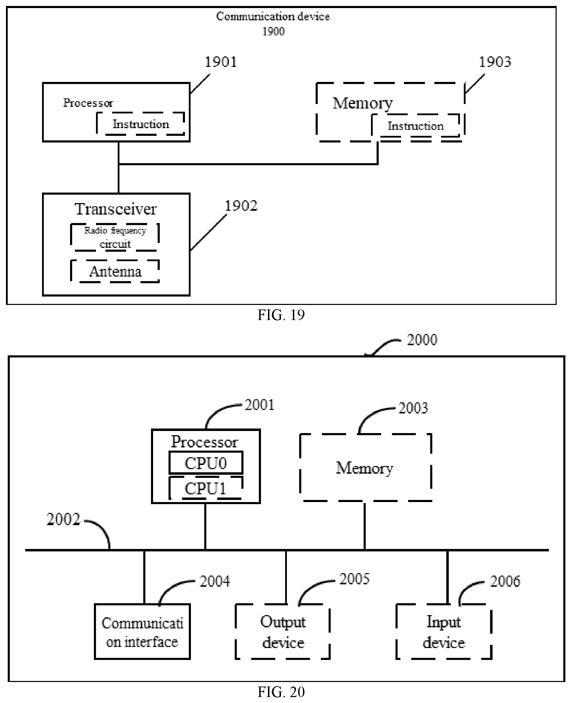

In another possible product form, the first device in embodiments of this application may be implemented by using a general bus architecture. For ease of description, FIG. 19 is a diagram of a structure of a communication apparatus 1900 according to an embodiment of this application. The communication apparatus 1900 includes a processor 1901 and a transceiver 1902. The communication apparatus 1900 may be the first device, or a chip or a chip system in the first device. FIG. 19 shows only main components of the communication apparatus 1900. In addition to the processor 1901 and the transceiver 1902, the communication apparatus may further include a memory 1903 and an input/output apparatus (not shown in the figure).

Optionally, the processor 1901 is mainly configured to process a communication protocol and communication data, control the entire communication apparatus, execute a software program, and process data of the software program. The memory 1903 is mainly configured to store the software program and the data. The transceiver 1902 may include a radio frequency circuit and an antenna. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to: receive data input by a user and output data to the user.

Optionally, the processor 1901, the transceiver 1902, and the memory 1903 may be connected through a communication bus.

After the communication apparatus is powered on, the processor 1901 may read the software program in the memory 1903, interpret and execute instructions of the software program, and process the data of the software program. When data needs to be sent in a wireless manner, the processor 1901 performs baseband processing on the to-be-sent data, and then outputs a baseband signal to the radio frequency circuit. The radio frequency circuit performs radio frequency processing on the baseband signal, and then sends a radio frequency signal in a form of an electromagnetic wave through the antenna. When data is sent to the communication apparatus, the radio frequency circuit receives a radio frequency signal through the antenna, converts the radio frequency signal into a baseband signal, and outputs the baseband signal to the processor 1901. The processor 1901 converts the baseband signal into data and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

In some embodiments, in hardware implementation, a person skilled in the art may figure out that the foregoing communication apparatus 180 may be in a form of the communication apparatus 1900 shown in FIG. 19.

In an example, a function/implementation process of the processing module 1801 in FIG. 18 may be implemented by the processor 1901 in the communication apparatus 1900 shown in FIG. 19 by invoking computer-executable instructions stored in the memory 1903, and a function/implementation process of the transceiver module 1802 in FIG. 18 may be implemented by the transceiver 1902 in the communication apparatus 1900 shown in FIG. 19.

In still another possible product form, the first device in this application may use a composition structure shown in FIG. 18, or include components shown in FIG. 20. FIG. 20 is a composition diagram of a communication apparatus 2000 according to this application. The communication apparatus 2000 may be the first device, or a chip or a system-on-a-chip in the first device.

As shown in FIG. 20, the communication apparatus 2000 includes at least one processor 2001 and at least one communication interface (where FIG. 20 is described merely by using an example in which one communication interface 2004 and one processor 2001 are included). Optionally, the communication apparatus 2000 may further include a communication bus 2002 and a memory 2003.

The processor 2001 may be a general-purpose central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. The processor 2001 may alternatively be another apparatus having a processing function, for example, a circuit, a component, or a software module. This is not limited.

The communication bus 2002 is configured to connect different components in the communication apparatus 2000, so that the different components can communicate with each other. The communication bus 2002 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, the bus is represented by using only one bold line in FIG. 20. However, it does not mean that there is only one bus or one type of bus.

The communication interface 2004 is configured to communicate with another device or a communication network. For example, the communication interface 2004 may be a module, a circuit, a transceiver, or any apparatus that can implement communication. Optionally, the communication interface 2004 may alternatively be an input/output interface located in the processor 2001, and is configured to implement signal input and signal output of the processor.

The memory 2003 may be an apparatus having a storage function, and is configured to store instructions and/or data. The instructions may be a computer program.

For example, the memory 2003 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital universal optical disc, a Blu-ray optical disc, and the like), a magnetic disk storage medium or another magnetic storage device, or the like. This is not limited.

It should be noted that the memory 2003 may exist independently of the processor 2001, or may be integrated with the processor 2001. The memory 2003 may be located inside the communication apparatus 2000, or may be located outside the communication apparatus 2000. This is not limited. The processor 2001 may be configured to execute the instructions stored in the memory 2003, to implement methods provided in the following embodiments of this application.

In an optional implementation, the communication apparatus 2000 may further include an output device 2005 and an input device 2006. The output device 2005 communicates with the processor 2001, and may display information in a plurality of manners. For example, the output device 2005 may be a liquid crystal display (liquid crystal display, LCD), a light emitting diode (light emitting diode, LED) display device, a cathode ray tube (cathode ray tube, CRT) display device, or a projector (projector). The input device 2006 communicates with the processor 2001, and may receive an input of a user in a plurality of manners. For example, the input device 2006 may be a mouse, a keyboard, a touchscreen device, or a sensing device.

In some embodiments, in hardware implementation, a person skilled in the art may figure out that the foregoing communication apparatus 180 may be in a form of the communication apparatus 2000 shown in FIG. 20.

In an example, a function/implementation process of the processing module 1801 in FIG. 18 may be implemented by the processor 2001 in the communication apparatus 2000 shown in FIG. 20 by invoking computer-executable instructions stored in the memory 2003, and a function/implementation process of the transceiver module 1802 in FIG. 18 may be implemented by the communication interface 2004 in the communication apparatus 2000 shown in FIG. 20.

It should be noted that the structure shown in FIG. 20 does not constitute a specific limitation on the first device. For example, in some other embodiments of this application, the first device may include more or fewer components than those shown in the figure, or some components may be combined, or some components may be split, or the components may be arranged differently. The components shown in the figure may be implemented by hardware, software, or a combination of software and hardware.

In some embodiments, an embodiment of this application further provides a communication apparatus. The communication apparatus includes a processor configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any one of the foregoing method embodiments. Certainly, the communication apparatus may not include a memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another component) and send the computer-executable instructions to the processor.

In still another possible implementation, the communication apparatus further includes a communication interface, and the communication interface is configured to communicate with a module outside the communication apparatus.

It may be understood that the communication apparatus may be a chip or a chip system. When the communication apparatus is a chip system, the communication apparatus may include a chip, or may include a chip and another discrete component. This is not specifically limited in embodiments of this application.

This application further provides a computer-readable storage medium. The computer-readable storage medium stores a computer program or instructions. When the computer program or instructions are executed by a computer, functions in any one of the foregoing method embodiments are implemented.

This application further provides a computer program product. When the computer program product is executed by a computer, functions in any one of the foregoing method embodiments are implemented.

A person of ordinary skill in the art may understand that, for the purpose of convenient and brief description, for a detailed working process of the foregoing system, apparatuses, and units, refer to a corresponding process in the foregoing method embodiments. Details are not described herein again.

It may be understood that the system, apparatuses, and methods described in this application may alternatively be implemented in another manner. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, that is, may be located in one position, or may be distributed on a plurality of network units. Parts displayed as units may be or may be not physical units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, the procedures or functions according to embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the protection scope of this application. Correspondingly, the specification and accompanying drawings are merely example descriptions of this application defined by the appended claims, and are considered as any of or all modifications, variations, combinations or equivalents that cover the scope of this application. It is clear that a person skilled in the art can make various modifications and variations to this application without departing from the scope of this application. This application is intended to cover these modifications and variations to this application provided that they fall within the scope of the claims of this application and their equivalent technologies.

## Claims

1. A communication method, wherein the method comprises:
obtaining downlink channel state information; and
determining, based on the downlink channel state information, a first precoding matrix from a first matrix corresponding to a first antenna array, wherein the first matrix comprises a plurality of precoding matrices, a plurality of antenna elements in the first antenna array are located on a plurality of antenna panels, a distance between first adjacent antenna elements in the plurality of antenna elements is different from a distance between second adjacent antenna elements, the first adjacent antenna elements are adjacent antenna elements on adjacent antenna panels in the plurality of antenna panels, the second adjacent antenna elements are adjacent antenna elements on a same antenna panel in the plurality of antenna panels, and the first matrix is determined based on a width of the antenna panel in the plurality of antenna panels and the distance between the first adjacent antenna elements.

2. The method according to claim 1, wherein the first adjacent antenna elements comprise a first antenna element and a second antenna element, the first antenna element and the second antenna element are located on different antenna panels, and the first antenna element and the second antenna element are adjacent.

3. The method according to claim 1 or 2, wherein the width of the antenna panel in the plurality of antenna panels is determined based on the distance between the second adjacent antenna elements and a quantity of rows or columns of an antenna element in the antenna panel.

4. The method according to any one of claims 1 to 3, wherein when the adjacent antenna panels are adjacent in a horizontal direction, the width of the antenna panel in the plurality of antenna panels is a width of the antenna panel in the plurality of antenna panels in the horizontal direction, and the first adjacent antenna elements are adjacent antenna elements in the adjacent antenna panels in the horizontal direction.

5. The method according to claim 4, wherein the first matrix corresponding to the first antenna array is determined based on a preset matrix, a quantity of rows of the first antenna array, and phase offsets of other antenna panels in the plurality of antenna panels other than a first antenna panel relative to the first antenna panel, wherein
the first antenna panel is a preset first reference antenna panel in the plurality of antenna panels;
the preset matrix is an N-length discrete Fourier transform DFT matrix, the preset matrix is a matrix corresponding to N antennas in a same polarization direction, a distance between adjacent antennas in the N antennas in the same polarization direction is equal to a distance between second adjacent antennas, and N is an integer greater than 1; and
a phase offset of a second antenna panel in the other antenna panels relative to the first antenna panel is determined based on the width of the antenna panel in the plurality of antenna panels and a distance between third adjacent antenna elements, the third adjacent antenna elements comprise a distance between two closest antenna elements that are respectively located in the first antenna panel and the second antenna panel, the second antenna panel is any one of the other antenna panels, and the distance between the third adjacent antenna elements is determined based on a distance between first adjacent antennas.

6. The method according to claim 5, wherein the first reference antenna panel is a leftmost or rightmost antenna panel in the plurality of antenna panels.

7. The method according to claim 5 or 6, wherein when the distance between the third adjacent antenna elements is equal to the distance between the first adjacent antenna elements, the phase offset of the second antenna panel relative to the first antenna panel is determined based on a phase relationship between the second antenna panel and the first antenna panel, and the phase relationship between the second antenna panel and the first antenna panel is determined based on the width of the antenna panel in the plurality of antenna panels in the horizontal direction and the distance between the first adjacent antenna elements.

8. The method according to claim 7, wherein the phase relationship between the second antenna panel and the first antenna panel satisfies the following relationship: ${{θ}_{n}^{1}}^{˜} = 2 π ∗ \frac{n}{N} ∗ \frac{\left({L}_{N}+{D}_{H}\right)}{{D}_{A}} , n = 0 , 1 , … , N - 1$ ${{θ}_{n}^{1}}^{˜}$ represents the phase relationship between the second antenna panel and the first antenna panel, *L_{N}* represents the width of the antenna panel in the plurality of antenna panels in the horizontal direction, *D_{H}* represents the distance between the first adjacent antenna elements, *N* represents a quantity of columns of an antenna array in each of the plurality of antenna panels, and *D_{A}* represents the distance between the second adjacent antenna elements.

9. The method according to any one of claims 1 to 3, wherein when the adjacent antenna panels are adjacent in a vertical direction, the width of the antenna panel in the plurality of antenna panels is a width of the antenna panel in the plurality of antenna panels in the vertical direction, and the first adjacent antennas are adjacent antennas in the adjacent antenna panels in the vertical direction.

10. The method according to claim 9, wherein the first matrix corresponding to the first antenna array is determined based on a preset matrix, a quantity of columns of the first antenna array, and phase offsets of other antenna panels in the plurality of antenna panels other than a third antenna panel relative to the third antenna panel, wherein
the third antenna panel is a preset second reference antenna panel in the plurality of antenna panels;
the preset matrix is an N-length discrete Fourier transform DFT matrix, the preset matrix is a matrix corresponding to N antennas in a same polarization direction, a distance between adjacent antennas in the N antennas in the same polarization direction is equal to a distance between second adjacent antennas, and N is an integer greater than 1; and
a phase offset of a fourth antenna panel in the other antenna panels relative to the third antenna panel is determined based on the width of the antenna panel in the plurality of antenna panels and a distance between fourth adjacent antenna elements, the fourth adjacent antenna elements comprise two closest antennas that are respectively located in the third antenna panel and the fourth antenna panel, the fourth antenna panel is any one of the other antenna panels, and the distance between the fourth adjacent antenna elements is determined based on the distance between the first adjacent antenna elements.

11. The method according to claim 10, wherein the second reference antenna panel is an uppermost or lowermost antenna panel in the plurality of antenna panels.

12. The method according to claim 10 or 11, wherein when the distance between the fourth adjacent antenna elements is equal to the distance between the first adjacent antenna elements, the phase offset of the fourth antenna panel relative to the third antenna panel is determined based on a phase relationship between the fourth antenna panel and the third antenna panel, and the phase relationship between the fourth antenna panel and the third antenna panel is determined based on the width of the antenna panel in the plurality of antenna panels in the vertical direction and the distance between the first adjacent antenna elements.

13. The method according to claim 12, wherein the phase relationship between the fourth antenna panel and the third antenna panel satisfies the following relationship: ${{θ}_{n}^{2}}^{˜} = 2 π ∗ \frac{n}{N} ∗ \frac{\left({L}_{M}+{D}_{V}\right)}{{D}_{A}} , n = 0 , 1 , … , N - 1$ ${{θ}_{n}^{2}}^{˜}$ represents the phase relationship between the fourth antenna panel and the third antenna panel, *L_{M}* represents the width of the antenna panel in the plurality of antenna panels in the vertical direction, *D_{V}* represents a distance between the first adjacent antennas, *M* represents a quantity of columns of an antenna array in each of the plurality of antenna panels, and *D_{A}* represents the distance between the second adjacent antennas.

14. The method according to any one of claims 1 to 13, wherein the method further comprises:
receiving first indication information, wherein the first indication information indicates the width of the antenna panel and the distance between the first adjacent antennas; and
determining, based on the first indication information, the first matrix corresponding to the first antenna array.

15. The method according to any one of claims 1 to 13, wherein the method further comprises:
receiving second indication information, wherein the second indication information indicates the first matrix corresponding to the first antenna array.

16. The method according to any one of claims 1 to 15, wherein the method further comprises:
sending third indication information, wherein the third indication information indicates the first precoding matrix.

17. The method according to claim 16, wherein obtaining the downlink channel state information comprises:
receiving downlink channel reference information; and
determining the downlink channel state information based on the downlink channel reference information.

18. The method according to any one of claims 1 to 17, wherein each precoding matrix in the plurality of precoding matrices indicates one group of beams; and correspondingly, the first precoding matrix indicates a 1^{st} group of beams in the plurality of groups of beams indicated by the plurality of precoding matrices.

19. The method according to any one of claims 1 to 13, wherein obtaining the downlink channel state information comprises:
receiving uplink channel reference information; and
determining the downlink channel state information based on the uplink channel reference information.

20. A communication method, wherein the method comprises:
obtaining downlink channel state information; and
determining, based on the downlink channel state information, a second precoding matrix from a second matrix corresponding to a second antenna array, wherein the second matrix comprises a plurality of precoding matrices, the plurality of precoding matrices correspond to X types of beams, and X is a positive integer greater than 1.

21. The method according to claim 20, wherein a plurality of antenna elements in the second antenna array are driven by X types of drive channels, and the X types of drive channels separately drive different quantities of antenna elements.

22. The method according to claim 21, wherein an I^{th} type of beam in the X types of beams is determined based on a third matrix, a quantity of columns of the second antenna array, and a drive channel corresponding to the I^{th} type of beam, I is a positive integer, and I is less than or equal to X, wherein
the third matrix is determined based on a preset matrix, the preset matrix is an N-length discrete Fourier transform DFT matrix, the preset matrix indicates a matrix corresponding to N antennas in a same polarization direction, a distance between adjacent antennas in the N antennas in the same polarization direction is equal to a distance between adjacent antennas on a same antenna panel in the second antenna array, and N is greater than or equal to the quantity of columns and/or a quantity of rows of the second antenna array.

23. The method according to claim 22, wherein when the plurality of antenna elements in the second antenna array are all located on a same antenna panel, the third matrix is the preset matrix; or
when the plurality of antenna elements in the second antenna array are located on a plurality of antenna panels, and distances between adjacent antenna elements in the plurality of antenna elements are equal, the third matrix is the preset matrix.

24. The method according to claim 22, wherein when the plurality of antenna elements in the second antenna array are located on a plurality of antenna panels, a distance between first adjacent antenna elements in the plurality of antenna panels is different from a distance between second adjacent antenna elements, the first adjacent antenna elements are adjacent antenna elements on adjacent antenna panels in the plurality of antenna panels, and the second adjacent antenna elements are adjacent antenna elements on a same antenna panel in the plurality of antenna panels,
the third matrix is determined based on the preset matrix and phase offsets of other antenna panels other than a first antenna panel in the plurality of antenna panels relative to the first antenna panel, wherein
the first antenna panel is a preset first reference antenna panel in the plurality of antenna panels; and
a phase offset of a second antenna panel in the other antenna panels relative to the first antenna panel is determined based on a width of the antenna panel in the plurality of antenna panels and a distance between third adjacent antenna elements, the third adjacent antenna elements comprise a distance between two closest antenna elements that are respectively located in the first antenna panel and the second antenna panel, the second antenna panel is any one of the other antenna panels, and the distance between the third adjacent antenna elements is determined based on a distance between first adjacent antennas.

25. The method according to any one of claims 22 to 24, wherein when I is equal to 1, that the I^{th} type of beam in the X types of beams is determined based on the third matrix, the quantity of columns of the second antenna array, and the drive channel corresponding to the I^{th} type of beam comprises:
a first type of beam is determined based on a fourth matrix and a first matrix set, wherein the first matrix set comprises X matrices;
the fourth matrix is determined based on the third matrix and the quantity of columns of the second antenna array; and
a Z^{th} matrix in the X matrices is determined based on the preset matrix and a first driving quantity, the first driving quantity is a quantity of drive channels required for driving a first quantity of antenna elements by using a Z^{th} type of drive channel in the X types of drive channels, the Z^{th} type of drive channel is one type of drive channel in the X types of drive channels, the first quantity is equal to the quantity of rows of the second antenna array, Z is a positive integer, and Z is less than or equal to X.

26. The method according to claim 25, wherein a first beam in the first type of beam is determined based on a first vector and a first vector set, the first vector is a column row vector in the fourth matrix, the first vector set comprises a column vector in each of the X matrices, and the first beam is one of the first type of beam.

27. The method according to claim 25 or 26, wherein a quantity of beams of the first type of beam is equal to a product of the quantity of columns of the second antenna array and a second driving quantity, and the second driving quantity is a quantity of drive channels required for driving the first quantity of antenna elements by using a drive channel that is in the X types of drive channels and that drives a largest quantity of antenna elements.

28. The method according to any one of claims 22 to 24, wherein when I is greater than 1, that the I^{th} type of beam in the X types of beams is determined based on the third matrix, the quantity of columns of the second antenna array, and the drive channel corresponding to the I^{th} type of beam comprises:
the I^{th} type of beam is determined based on a fifth matrix and a second matrix set, and the second matrix set comprises X-I+1 matrices, wherein
the fifth matrix is determined based on the third matrix and a first difference, the first difference is a difference between the quantity of columns of the second antenna array and a first column quantity, the first column quantity is a quantity of columns occupied in the second antenna array by an antenna element driven by an I-1 type of drive channel, and the I-1 type of drive channel is a first I-1 type of drive channel that drives a largest quantity of antenna elements in the X types of drive channels; and
a Y^{th} matrix in the X-I+1 matrices is determined based on the preset matrix and a third driving quantity, the third driving quantity is a quantity of drive channels required for driving the first quantity of antenna elements by using a Y^{th} type of drive channel in a X-I+1 type of drive channel, the X-I+1 type of drive channel is a drive channel in the X types of drive channels other than the I-1 type of drive channel, the Y^{th} type of drive channel is one type of drive channel in the X-I+1 type of drive channel, the first quantity is equal to the quantity of rows of the second antenna array, Y is a positive integer, and Y is less than or equal to X-I+1.

29. The method according to claim 28, wherein a second beam in the I^{th} type of beam is determined based on a second vector and a second vector set, the second vector is a column vector in the fifth matrix, the second vector set comprises a column vector in each of the X-I+1 matrices, and the second beam is one of the I^{th} type of beam.

30. The method according to claim 28 or 29, wherein a beam quantity of the I^{th} type of beam is equal to a product of the first difference and a second difference, and the second difference is a difference between a fourth driving quantity and a fifth driving quantity, wherein
the fourth driving quantity is a quantity of drive channels required for driving the first quantity of antenna elements by using a drive channel that drives a largest quantity of antennas in the X-I+1 type of drive channel, and the fifth driving quantity is a quantity of drive channels required for driving the first quantity of antenna elements by using a drive channel that drives a smallest quantity of antenna elements in the I-1 type of drive channel.

31. The method according to any one of claims 22 to 30, wherein the method further comprises:
receiving fourth indication information, wherein the fourth indication information indicates a driving relationship between the X types of drive channels and the plurality of antenna elements in the second antenna array; and
determining, based on the second indication information, the second matrix corresponding to the second antenna array.

32. The method according to claim 31, wherein the driving relationship between the plurality of antenna elements in the second antenna array comprises: distribution, in the second antenna array, of antenna elements that are separately driven by the X types of drive channels in the plurality of antenna elements.

33. The method according to claim 32, wherein the fourth indication information indicates a quantity of columns occupied by the antenna elements that are separately driven by the X types of drive channels in the second antenna array and a quantity of channels required for separately driving the first quantity of antenna elements by using the X types of drive channels, and the first quantity is equal to the quantity of rows of the second antenna array.

34. The method according to any one of claims 31 to 33, wherein the fourth indication information further indicates the width of the antenna panel in the plurality of antenna panels and the distance between the first adjacent antenna elements, and the first adjacent antenna elements are the adjacent antenna elements on the adjacent antenna panels in the plurality of antenna panels.

35. The method according to any one of claims 20 to 34, wherein the method further comprises:
receiving fifth indication information, wherein the fifth indication information indicates the second matrix corresponding to the second antenna array.

36. The method according to any one of claims 20 to 35, wherein the method further comprises:
sending sixth indication information, wherein the sixth indication information indicates the second precoding matrix.

37. The method according to claim 36, wherein obtaining the downlink channel state information comprises:
receiving downlink channel reference information; and
determining the downlink channel state information based on the downlink channel reference information.

38. The method according to any one of claims 20 to 37, wherein each precoding matrix in the plurality of precoding matrices indicates one group of beams; and correspondingly, the second precoding matrix indicates a 2^{nd} group of beams in the plurality of groups of beams indicated by the plurality of precoding matrices, and the 2^{nd} group of beams comprises at least one type of beam in the X types of beams.

39. The method according to any one of claims 20 to 30, wherein obtaining the downlink channel state information comprises:
receiving uplink channel reference information; and
determining the downlink channel state information based on the uplink channel reference information.

40. A communication apparatus, wherein the communication apparatus comprises a transceiver module and a processing module;
the transceiver module is configured to perform receiving behavior or sending behavior in the method according to any one of claims 1 to 19, or configured to perform receiving behavior or sending behavior in the method according to any one of claims 20 to 39; and
the processing module is configured to perform processing behavior in the method according to any one of claims 1 to 19, or configured to perform processing behavior in the method according to any one of claims 20 to 39.

41. A communication apparatus, wherein the communication apparatus comprises a processor, and the processor is configured to run a computer program or instructions, so that the communication apparatus performs the method according to any one of claims 1 to 19, or the communication apparatus performs the method according to any one of claims 20 to 39.

42. A computer-readable storage medium, wherein the computer-readable storage medium stores computer instructions or a program; and when the computer instructions or the program is run on a computer, the method according to any one of claims 1 to 19 is performed, or the method according to any one of claims 20 to 39 is performed.

43. A computer program product, wherein when the computer program product runs on a communication apparatus, the communication apparatus is enabled to perform the method according to any one of claims 1 to 19, or the communication apparatus is enabled to perform the method according to any one of claims 20 to 39.

44. A chip, comprising a processor, wherein the processor is coupled to a memory, the memory is configured to store a program or instructions, and when the program or the instructions are executed by the processor, the chip is enabled to perform the method according to any one of claims 1 to 19, or the chip is enabled to perform the method according to any one of claims 20 to 39.
